# EUROPÄISCHE PATENTSCHRIFT

(11) **EP 2 125 456 B1**
(45) Veröffentlichungstag und Bekanntmachung des Hinweises auf die Patenterteilung: **16.02.2011**
(21) Anmeldenummer: 07846917.8
(22) Anmeldetag: 30.11.2007
(51) Int. Cl.: B60S 1/08

(54) **SENSORMODUL ZUR DETEKTION VON AEROSOLEN UND/ODER REGENTROPFEN UND BETRIEBSVERFAHREN HIERFÜR**
SENSOR MODULE FOR THE DETECTION OF AEROSOLS AND/OR RAINDROPS AND METHOD FOR OPERATING THE SAME
MODULE DE DETECTION POUR LA DETECTION D'AEROSOLS ET/OU DE GOUTTES D'EAU ET PROCEDE D'UTILISATION DU MODULE

(30) Priorität: 26.01.2007 DE 102007004974
(43) Veröffentlichungstag der Anmeldung: 02.12.2009
(73) Patentinhaber: Valeo Schalter und Sensoren GmbH, 74321 Bietigheim-Bissingen (DE)
(72) Erfinder: SCHULER, Thomas, 75446 Wiernsheim (DE); HOFMANN, Heiko, 74343 Sachsenheim (DE)
(86) Internationale Anmeldenummer: PCT/EP2007/010392
(87) Internationale Veröffentlichungsnummer: WO 2008/089807

(56) Entgegenhaltungen:
- EP-A- 1 433 676
- EP-A- 1 777 943
- WO-A-03/029056
- GB-A- 2 394 282
- US-A- 4 874 242

## Beschreibung

Die Erfindung betrifft ein Sensormodul zur Detektion von Aerosolen und/oder Regentropfen, insbesondere auf einer Windschutzscheibe eines Kraftfahrzeugs.

Die Erfindung betrifft ferner ein Betriebsverfahren für ein derartiges Sensormodul.

Sensormodule der eingangs genannten Art sind bekannt und weisen den Nachteil auf, dass sie unmittelbar in dem Bereich angeordnet werden müssen, der auf Aerosole bzw. Regentropfen zu überwachen ist. Insbesondere bei Windschutzscheiben von Kraftfahrzeugen ist diese Form der Anbringung nachteilig, da das für den Fahrer zur Verfügung stehende Sichtfeld beeinträchtigt wird und darüberhinaus eine aufwendige Kabelführung z.B. um die Windschutzscheibe herum erforderlich ist.

Die WO 03/029056 A2 beschreibt ein gattungsgemäßes Sensormodul zur Detektion von Feuchtigkeit auf einer Fahrzeugwindschutzscheibe mittels einer im Abstand zur Windschutzscheibe angeordneten Stereokamera, die einen Bereich der Windschutzscheibe auf zwei separaten Bildbereichen abbildet. Um Objekte im Nahbereich, wie z. B. Regen auf der Windschutzscheibe besser von Objekten im Fernbereich zu unterscheiden, wird vorgeschlagen, die Bilder der beiden Bildbereiche voneinander zu subtrahieren. Bei Aufnahme der Bilder kann der von der Kamera erfasste Bereich der Windschutzscheibe mit einer LED beleuchtet werden. Regen auf der Windschutzscheibe wird hierbei durch ein Bild verarbeitendes Verfahren erkannt.

Die US 4,874,242 A beschreibt ein Verfahren zur Erfassung von Niederschlag auf einee Scheibe, bei welchem die Scheibe durch eine Lichtquelle beleuchtet und das abgestrahlte Licht durch zwei von der Scheibe beabstandete Empfänger erfasst wird Die Erfassungsbereiche der Empfänger sind jeweils winklig zur Strahlachse der Lichtquelle angeordnet und schneiden diese in unterschiedlichen Schnittpunkten.

Aus der GB 2 394 282 A ist ein Regensensor an einer Fahrzeugscheibe mit einer Lichtquelle bekannt, die Licht durch die Scheibe hindurch abstrahlt. Das von auf der Scheibe befindlichen Regentropfen zurückgestrahlte Licht wird durch mehrere Detektoren erfasst, die in einem Abstand zur Fahrzeugscheibe angeordnet sind.

Demgemäß ist es Aufgabe der vorliegenden Erfindung, ein Sensormodul der eingangs genannten Art dahingehend zu verbessern, dass eine präzise und besonders effiziente Detektion ermöglicht wird.

Diese Aufgabe wird bei dem Sensormodul der eingangs genannten Art erfindungsgemäß dadurch gelöst, dass die Sensorvorrichtung die folgenden Komponenten aufweist:
- einen Referenzsender zum Senden mindestens eines ersten Referenzsignals mit einer vorgebbaren Referenzsignalform über eine Referenzübertragungsstrecke, wobei die Referenzübertragungsstrecke eine bekannte Übertragungsfunktion aufweist,
- einen Empfänger zum Empfangen eines ersten Referenzempfangssignals an einem Ausgang der Referenzübertragungsstrecke, wobei das erste Sendesignal und das Referenzsignal jeweils von Null verschiedene Frequenzanteile aufweisen, und sich die Zeitfunktionen der Signale zumindest über einen vorgebbaren Zeitbereich hinweg zu einem Gleichsignal addieren.

Die erfindungsgemäße Ausnutzung des reflektierten Empfangssignals ermöglicht vorteilhaft den Einbau des Sensormoduls z.B. in einem Bereich des Kraftfahrzeugs, der von der Windschutzscheibe oder auch einer zu untersuchenden Seitenscheibe oder dergleichen entfernt angeordnet ist und somit einfacher mit anderen Systemen z.B. über Kabel verbindbar ist als ein direkt an bzw. in der betreffenden Scheibe angeordnetes herkömmliches System. Gleichzeitig beeinträchtigt ein von der zu untersuchenden Scheibe entfernt angeordnetes Sensormodul nicht die freie Sicht z.B. eines Fahrers des Kraftfahrzeugs in demselben Umfang, wie es bei direkt an bzw. in der Scheibe angeordneten Systemen der Fall ist, was insbesondere bei Anwendungen im Bereich der Windschutzscheibe und der Heckscheibe störend ist.

Die erfindungsgemäße erste optische Übertragungsstrecke zur Übermittlung des ersten Sendesignals stellt insbesondere bei der Auswahl einer für Menschen nicht sichtbaren Wellenlänge für das Sendesignal keine Beeinträchtigung der Sichtverhältnisse im Bereich der erfindungsgemäß untersuchten Scheibe dar, und die Wahl der Signalform für das Sendesignal und das Referenzsignal ermöglicht eine besonders einfache Auswertung.

Im Gegensatz zu dem ersten Sendesignal muss es sich bei dem Referenzsignal nicht um ein optisches Signal handeln; vielmehr kann das Referenzsignal bzw. das Referenzempfangssignal als elektrisches Signal ausgebildet sein und zusammen mit einem elektrischen Empfangssignal analysiert werden, das am Ausgang eines als Photodiode ausgebildeten Empfängers erhalten wird.

Eine besonders effiziente Analyse des Empfangssignals und des Referenzsignals bzw. des hiervon abhängigen Referenzempfangssignals ergibt sich erfindungsgemäß dadurch, dass die Auswerteeinheit dazu ausgebildet ist:
- das erste Empfangssignal mit einem/dem Referenzempfangssignal zu Addieren oder zu Multiplizieren, um ein Summensignal zu erhalten,
- vorgebbare Zeitbereiche des Summensignals auszuwerten, um auf eine Reflexion und/oder Dämpfung und/oder Phasenverschiebung des Sendesignals durch das Aerosol bzw. Regentropfen zu schließen, und
- aus der Reflexion und/oder Dämpfung und/oder Phasenverschiebung auf das Aerosol bzw. die Regentropfen rückzuschließen.

In einem ausgeregelten Zustand der erfindungsgemäßen Sensorvorrichtung addieren sich die Zeitfunktionen des Sendesignals und des Referenzsignals vorteilhaft zumindest über einen vorgebbaren Zeitbereich hinweg zu einem Gleichsignal. Aufgrund der unterschiedlichen Signalwege ergeben sich jedoch insbesondere bei dem optischen Sendesignal eine von den Reflexions- bzw. Transmissionseigenschaften des zu untersuchenden Bereichs, z.B. der Windschutzscheibe, abhängige Dämpfung und/oder Phasenverschiebung im Bezug auf das Referenzsignal, die erfindungsgemäß ausgewertet werden, um auf das Vorhandensein eines Aerosols und/oder von Regentropfen oder sonstigen die Reflexions- bzw. Transmissionseigenschaften des zu untersuchenden Bereichs beeinflussenden Störungen zu schließen.

D.h., anhand einer Abweichung des erfindungsgemäß gebildeten Summensignals von einem Gleichsignal kann vorteilhaft auf das Vorhandensein eines Aerosols und/oder von Regentropfen oder sonstiger Störungen geschlossen werden.

Besonders vorteilhaft kann unter Berücksichtigung einer zeitlichen Änderung des Empfangssignals und/oder des Referenzempfangssignals und/oder des hieraus gebildeten Summensignals zwischen den verschiedenen Störungen differenziert werden.

Üblicherweise ergibt sich eine Verschmutzung z.B. der Windschutzscheibe durch Staubpartikel innerhalb eines verhältnismäßig langen Zeitraums, während auf die Windschutzscheibe aufprallende Regentropfen beispielsweise eine verhältnismäßig schnelle Änderung der Reflexions- bzw. Transmissionseigenschaften der Windschutzscheibe bewirken.

Ein weiterer Einfluss, der auf die Reflexions- bzw. Transmissionseigenschaften einer erfindungsgemäß untersuchten Windschutzscheibe wirkt, stellt die Kondensation von Wasser an der Innenseite der Windschutzscheibe, d.h. ein Beschlagen der Windschutzscheibe, dar. Eine derartige Kondensation weist Untersuchungen der Anmelderin zufolge üblicherweise eine dritte typische Zeitkonstante auf, die von der verhältnismäßig langsamen Beaufschlagung mit Staub und der nahezu augenblicklichen Veränderung der Reflexions- bzw. Transmissionseigenschaften durch Regentropfen deutlich unterscheidbar und dementsprechend durch das erfindungsgemäße Verfahren erkennbar ist.

Besonders geringe Störungen, die jedoch bereits zu einer Abweichung von dem ausgeregelten Zustand führen können, werden erfindungsgemäß vorteilhaft dadurch erkannt, dass die Auswerteeinheit ausgebildet ist, das Summensignal über mehrere vorgebbare Zeitbereiche zu addieren bzw. zu integrieren. Je nach der Anzahl der Integrationszyklen können auf diese Weise insbesondere auch geringste Phasenverschiebungen zwischen dem Empfangssignal und dem Referenzempfangssignal erkannt werden, so dass u.a. auch die Länge der optischen Übertragungsstrecke des ersten Sendesignals aufgrund von Laufzeiteffekten und damit auch der Abstand des Sensormoduls von dem untersuchten bzw. reflektierenden Bereich ermittelt werden kann.

Besonders vorteilhaft werden jeweils unterschiedliche Zeitbereiche des Summensignals ausgewertet, um auf die Dämpfung und/oder Phasenverschiebung des Sendesignals zu schließen, wodurch in Abhängigkeit der gewählten Signalformen jeweils diejenigen Bereiche auswertbar sind, die bezüglich der zu untersuchenden Eigenschaft die größte Empfindlichkeit aufweisen. Dementsprechend können bei Rechtecksignalen insbesondere die den Zustandswechseln entsprechenden Zeitbereiche untersucht werden, um Informationen über eine Phasenverschiebung zu erhalten, während mit der Dämpfung korrespondierende Amplitudeninformationen auch aus den anderen Zeitbereichen der betreffenden Signale bzw. des Summensignals erhalten werden können.

Besonders vorteilhaft ist erfindungsgemäß mindestens eine steuerbare Mikrospiegelanordnung vorgesehen; um den Strahlengang des Sendesignals und/oder des Empfangssignals und/oder des Referenzsignals - im Falle eines ebenfalls optischen Referenzsignals - zu beeinflussen. Dadurch ist es beispielsweise möglich, das Sendesignal abwechselnd auf mehrere Bereiche der zu untersuchenden Scheibe oder generell auf verschiedene Raumbereiche auszurichten und dementsprechend mit nur einem erfindungsgemäßen Sensormodul eine Vielzahl von Bereichen zu überwachen.

Das erfindungsgemäße Sensormodul kann erfindungsgemäß darüberhinaus mindestens eine Fokussieroptik aufweisen, um das Sendesignal - oder auch ein bereits reflektiertes Empfangssignal - auf einen zu untersuchenden Raumbereich bzw. einen entsprechenden Empfänger zu fokussieren. Die Fokussieroptik ist besonders vorteilhaft zusammen mit einer ggf. vorgesehenen Mikrospiegelanordnung in ein gemeinsames Optikmodul integrierbar.

Zur Erzeugung des Sendesignals und/oder des Referenzsignals werden bevorzugt Leuchtdioden und/oder Laserdioden eingesetzt, wobei insbesondere oberflächenemittierende Diodenlaser, VCSEL (vertical cavity surface emitting laser) zum Einsatz kommen.

Erfindungsgemäß kann die zur Übertragung des Sendesignals vorgesehene Übertragungsstrecke so ausgebildet sein, dass sie einen Bereich einer Scheibe, insbesondere der Windschutzscheibe des Kraftfahrzeugs, und/oder einer Abdeckscheibe einer Leuchte umfasst. Die Übertragungsstrecke kann vorteilhaft insbesondere so ausgebildet sein, dass das optische Sendesignal etwa senkrecht auf die zu untersuchende Scheibe auftrifft und das reflektierte Empfangssignal sich dementsprechend näherungsweise ebenfalls orthogonal von der Scheibe auf das Sensormodul ausbreitet. In diesem Fall können Sender und Empfänger für das optische Signal vorzugsweise in demselben Gehäuse, z.B. in einem Gehäuse des Sensormoduls oder eines darin enthaltenen Optikmoduls angeordnet sein.

Die erfindungsgemäße Auswertung der Anwesenheit von Schmutzpartikeln, Regentropfen oder sonstiger Störungen auf einer Scheibe kann darüberhinaus auch dann durchgeführt werden, wenn das optische Sendesignal mit einem derartigen Winkel auf die zu untersuchende Scheibe auftrifft, dass sich nur bei bestimmten Konfigurationen bezüglich einer Beaufschlagung der Scheibe eine Totalreflexion in der Scheibe ergibt oder nicht. In diesem Fall kann der Empfänger entsprechend von dem Sender entfernt angeordnet sein, um das bei der ggf. auftretenden Totalreflexion entstehende reflektierte Signal erfassen zu können.

Besonders vorteilhaft ist das erfindungsgemäße Sensormodul in eine Komponente eines Kraftfahrzeugs, insbesondere in eine Dachbedieneinheit und/oder die A-Säule und/oder eine Leuchte, insbesondere eine Rückleuchte bzw. einen Scheinwerfer, integrierbar. -

Als eine weitere Lösung der Aufgabe der vorliegenden Erfindung ist ein Verfahren zum Betreiben eines Sensormoduls gemäß Patentanspruch 8 angegeben.

Eine besonders vorteilhafte Ausführungsform des erfindungsgemäßen Verfahrens sieht die Verwendung sinusförmiger oder rechteckförmiger Signale vor, wobei das erste Sendesignal eine vorgebbare Phasenverschiebung, insbesondere 180 Grad, zu dem Referenzsignal aufweist.

Die Verwendung mehrerer Sendesignale, die z.B. auch unterschiedliche Wellenlängen aufweisen können, ist ebenfalls denkbar.

Besonders vorteilhaft kann bei dem erfindungsgemäßen Verfahren vorgesehen sein, dass in Abhängigkeit der Analyse ein Scheibenwischersystem und/oder ein Belüftungssystem des Kraftfahrzeugs angesteuert wird.

Neben der Untersuchung des reflektierten Anteils des Sendesignals ermöglicht das der Erfindung zugrundeliegende Prinzip alternativ oder zusätzlich auch eine Analyse eines transmittierten Anteils des Sendesignals, der beispielsweise durch einen mit Aerosol bzw. Regentropfen beaufschlagten Raumbereich hindurchtritt. Generell ist es zur Anwendung des erfindungsgemäßen Prinzips nicht erforderlich, an einer Scheibe reflektierte Anteile des Sendesignals auszuwerten. An zu erkennenden Aerosolen und/oder Schmutzpartikeln und/oder Regentropfen reflektierte bzw. gestreute oder durch entsprechend beaufschlagte Raumbereiche transmittierte Anteile des Sendesignals können ebenso vorteilhaft zusammen mit dem jeweiligen Referenzsignal ausgewertet werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

In der Zeichnung zeigt:
- Figur 1: ein Blockschaltbild einer optischen Sensorvorrichtung des erfindungsgemäßen Sensormoduls,
- Figur 2: eine Detailansicht der Vorrichtung aus Figur 1,
- Figur 3a: einen Zeitverlauf eines erfindungsgemäß erhaltenen Empfangssignals,
- Figur 3b bis Figur 3d: jeweils einen schematischen Zeitverlauf von rechteckförmigen Sendesignalen und einem entsprechenden Empfangssignal,
- Figur 4: ein erfindungsgemäßes Sensormodul in einem ersten Szenario, bei dem das erfindungsgemäße Verfahren verwendet wird,
- Figur 5: ein weiteres Szenario, bei dem das erfindungsgemäße Verfahren verwendet wird,
- Figur 6: eine Ausführungsform einer erfindungsgemäßen Signalerzeugungseinheit,
- Figur 7: optische Komponenten einer Ausführungsform der erfindungsgemäßen Vorrichtung,
- Figur 8: eine erfindungsgemäße Ansteuerschaltung zur Erzeugung eines optischen Signals,
- Figur 9: eine erfindungsgemäße Phasenschieber-Schaltung,
- Figur 10: eine Ausführungsform der Erfindung mit mehreren Übertragungsstrecken,
- Figur 11: einen zeitlichen Verlauf von für die Ausführungsform gemäß Figur 10 verwendeten Rechtecksignalen,
- Figur 12: eine schematische Darstellung einer erfindungsgemäßen Optik einschließlich einer Mikrospiegel-Anordnung,
- Figur-13a und 13b: jeweils eine weitere erfindungsgemäße Ausführungsform optischer Komponenten der Vorrichtung, und
- Figur 14: eine erfindungsgemäße Drehspiegelanordnung als Bestandteil einer optischen Übertragungsstrecke.

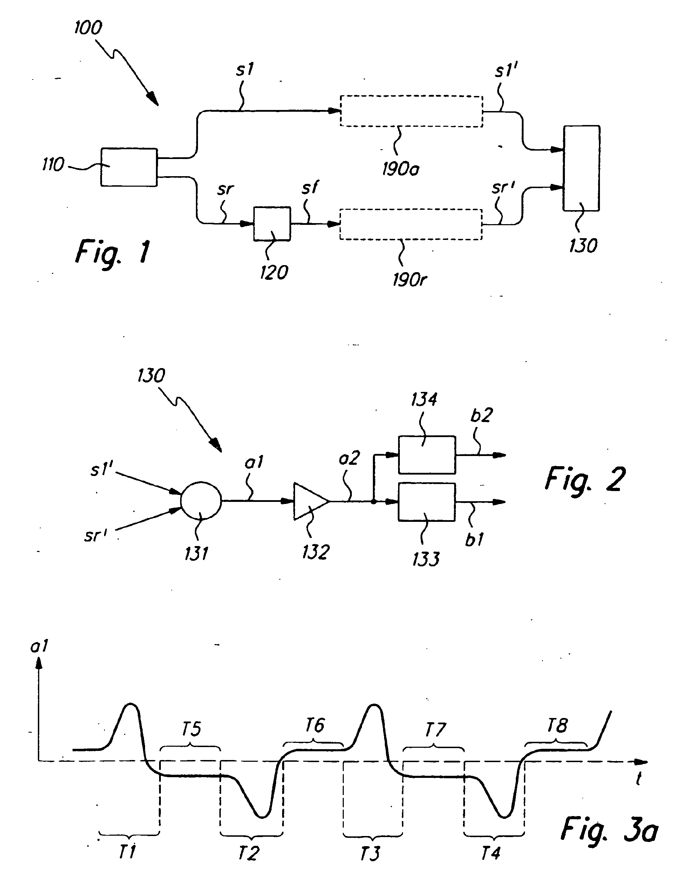

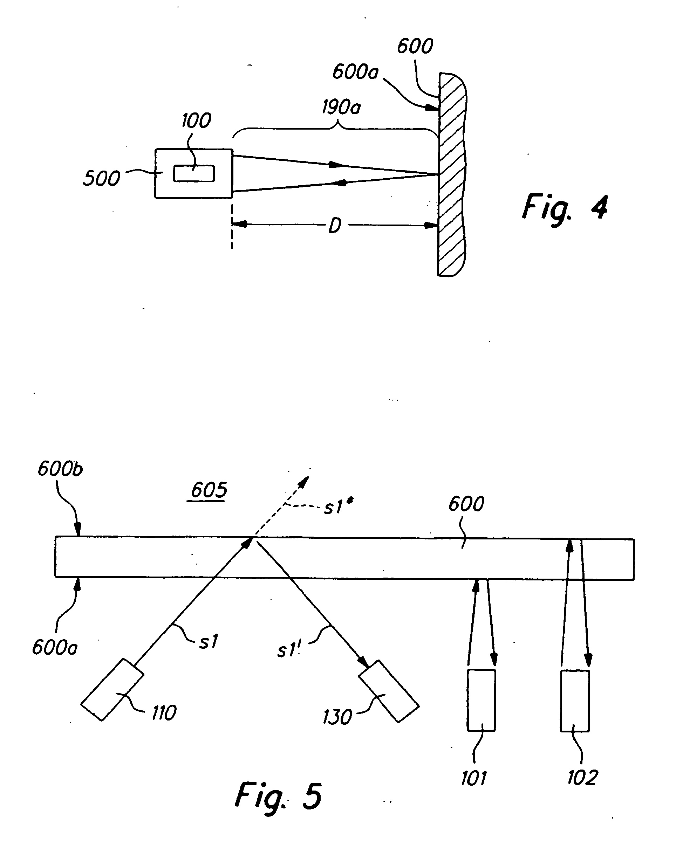

Figur 1 zeigt eine Ausführungsform einer optischen Sensorvorrichtung 100, wie sie in dem in Figur 4 abgebildeten erfindungsgemäßen Sensormodul 500 zur Detektion von Aerosolen und/oder Regentropfen oder auch Schmutz auf bzw. im Bereich einer Windschutzscheibe 600 eines Kraftfahrzeugs vorgesehen ist.

Die optische Sensorvorrichtung 100, deren Funktionsweise nachstehend näher beschrieben ist, ermöglicht vorteilhaft die Detektion von AerosoLen usw. auf bzw. im Bereich der um den Abstand D entfernt von dem Sensormodul 500 (Figur 4) angeordneten Windschutzscheibe 600 und erlaubt somit eine flexible Anordnung des Sensormoduls 500 in einem Kraftfahrzeug. Im Gegensatz zu herkömmlichen Systemen ist insbesondere eine Integration des erfindungsgemäßen Sensormoduls 500 direkt in die Windschutzscheibe 600 oder eine Anbringung direkt an der Windschutzscheibe 600 nicht erforderlich, wodurch die bekannten Nachteile wie z.B. eine Beschränkung des Sichtfelds eines Fahrers oder anderer Insassen des Kraftfahrzeugs vermieden werden.

Das erfindungsgemäße Sensormodul 500 kann ohne Beeinträchtigung seiner Funktion beispielsweise in einer Dachbedieneinheit und/oder der A-Säule und/oder an bzw. in einem Rückspiegel des Kraftfahrzeugs integriert werden. Prinzipiell sind für die Funktion des erfindungsgemäßen Sensormoduls 500 alle Einbauorte geeignet, die eine Sichtverbindung bzw. die Ausbildung mindestens einer optischen Übertragungsstrecke zwischen dem erfindungsgemäßen Sensormodul 500 und dem auf Aerosole bzw. Regen bzw. Schmutz zu überwachenden Bereich, insbesondere einer Scheibe, bieten. Hierbei kommen auch solche Einbauorte in Frage, bei denen die Übertragungsstrecke bzw. Sichtverbindung mittels optischer Hilfsmittel wie z.B. Umlenkspiegel oder sonstiger Hilfsoptiken etabliert wird.

Die optische Sensorvorrichtung 100 weist eine Signalerzeugungseinheit 110 (Figur 1) auf, die wie abgebildet ein erstes Sendesignal s1 und ein weiteres, auch als Referenzsignal bezeichnetes Signal sr erzeugt. Die Signale s1, sr sind zur Übertragung über ihnen entsprechend zugeordnete Übertragungsstrecken 190a, 190r vorgesehen.

Die erste Übertragungsstrecke 190a weist eine Übertragungsfunktion auf, die von einer zu erfassenden physikalischen Größe abhängt, die ihrerseits abhängig ist von den zu detektierenden Effekten wie z.B. dem Vorhandensein von Aerosolen bzw. dem Regen oder Schmutz auf oder im Bereich der Windschutzscheibe 600.

Bei der zu erfassenden physikalischen Größe kann es sich beispielsweise um das Reflexionsvermögen eines in dem interessierenden Bereich vorhandenen Mediums, z.B. der Windschutzscheibe 600 selbst, oder um die Laufzeit bzw. eine Phasenverschiebung des ersten Sendesignals s1 in der ersten Übertragungsstrecke 190a handeln.

Erfindungsgemäß ist die erste Übertragungsstrecke 190a vorteilhaft zumindest teilweise als optische Freiraum-Übertragungsstrecke ausgebildet, die einen Weg D zwischen dem Sensormodul 500 und dem interessierenden Bereich, d.h. vorliegend der Windschutzscheibe 600, vgl. Figur 4, und wieder zurück umfasst, und das Sendesignal s1 ist ein optisches Signal.

An dem Ausgang der ersten Übertragungsstrecke 190a wird ein erstes Empfangssignal s1' (Figur 1) erhalten, dessen Signalform (insbesondere Amplitude und/oder Phasenlage) z.B. von dem Vorhandensein und/oder Abstand reflektierender Objekte wie z.B. Regentropfen oder Schmutzpartikel oder eines Aerosols in dem Bereich der Windschutzscheibe 600 abhängt.

Die zweite Übertragungsstrecke 190r ist als Referenzübertragungsstrecke vorgesehen und weist entsprechend eine bekannte Übertragungsfunktion auf, die insbesondere nicht von der zu erfassenden physikalischen Größe abhängt. Die Referenzübertragungsstrecke 190r kann erfindungsgemäß ebenfalls als optische Übertragungsstrecke ausgebildet sein; in diesem Fall ist das Referenzsignal sr auch ein optisches Signal. Alternativ kann die Referenzübertragungsstrecke 190r jedoch auch z.B. rein elektronisch realisiert werden, wobei als Referenzsignal sr dementsprechend ein elektronisches Signal verwendet wird.

An dem Ausgang der Referenzübertragungsstrecke 190r wird ein Referenzempfangssignal sr' erhalten, das aufgrund der bekannten Übertragungsfunktion der Referenzübertragungsstrecke 190r im Idealfall, d.h. unter Ausschluss von Alterungseffekten, Temperaturabhängigkeit usw. z.B. auch direkt aus dieser und dem Referenzsignal sr ermittelt werden könnte.

In dem die Referenzübertragungsstrecke 190r aufweisenden Referenzzweig der erfindungsgemäßen Sensorvorrichtung 100 sind wie aus Figur 1 ersichtlich zusätzlich vorzugsweise aktiv ausgebildete Filtermittel 120 vorgesehen, die eine Amplitude und/oder Phasenlage des Referenzsignals sr bezüglich des Sendesignals s1 beeinflussen können, wodurch an einem Ausgang der Filtermittel 120 ein gefiltertes Referenzsignal sf erhalten wird, das anstelle des ungefilterten Referenzsignals sr der Referenzübertragungsstrecke 190r zugeführt wird.

Bevorzugt weisen das Sendesignal s1 und das Referenzsignal sr bzw. das gefilterte Referenzsignal sf eine rechteckförmige Signalform auf, und die Signale s1, sr besitzen eine Phasenverschiebung von 180 Grad zueinander, so dass sie sich bei gleichen Amplituden zu einem Gleichsignal ergänzen würden.

Das erste Sendesignal s1 wird in der ersten Übertragungsstrecke 190a jedoch in Abhängigkeit der zu erfassenden physikalischen Größe beeinflusst, insbesondere hinsichtlich seiner Amplitude und/oder seiner Phasenlage bezogen auf das Referenzsignal sr. Demnach enthalten die ausgangsseitig der Übertragungsstrecken 190a, 190r empfangenen Signale s1', sr' Informationen über die auszuwertende physikalische Größe, d.h. vorliegend über das Auftreten von Aerosolen und/oder Regentropfen und/oder Schmutzpartikeln im Bereich der Windschutzscheibe 600, vgl. Figur 4.

Beispielsweise wird die Reflektivität der Innenoberfläche 600a der Windschutzscheibe 600 durch kondensierende Feuchtigkeit aus dem Innenraum des Kraftfahrzeugs verändert, so dass sich ein entsprechendes Beschlagen der Windschutzscheibe 600 aus der veränderten Reflektivität ableiten lässt.

Auch auf der nicht in Figur 4 abgebildeten Außenoberfläche der Windschutzscheibe 600 befindliche Partikel oder Regentropfen usw. können die Reflektivität bzw. eine Phasenverschiebung des Sendesignals s1 bewirken und sind damit durch das erfindungsgemäße Verfahren erkennbar.

Die Auswertung der ausgangsseitig der Übertragungsstrecken 190a, 190r (Figur 1) erhaltenen Empfangssignale s1', sr' erfolgt in einer Auswerteeinheit 130, deren Funktion nachstehend unter Bezugnahme auf Figur 2 beschrieben ist.

Die Auswerteeinheit 130 weist eingangsseitig eine Addiereinheit 131 auf, der die Empfangssignale s1', sr' der beiden Übertragungsstrecken 190a, 190r zugeführt werden. An dem Ausgang der Addiereinheit 131 ergibt sich demzufolge ein Summensignal a1, das - bei identisch ausgebildeten Übertragungsstrecken 190a, 190r - aufgrund der erfindungsgemäßen Auswahl der Signale s1, sr einem Gleichsignal entspräche. Tatsächlich wird aufgrund der üblicherweise voneinander verschiedenen Übertragungsfunktionen der Übertragungsstrecken 190a, 190r ein von einem Gleichsignal abweichendes Summensignal a1 erhalten, das z.B. den in Figur 3a abgebildeten zeitlichen Verlauf aufweist und Informationen über eine Verschmutzung der Windschutzscheibe 600 bzw. Aerosole oder sonstige die Übertragungsfunktion der Übertragungsstrecke 190a beeinflussende Effekte enthält.

Die Funktion der Addiereinheit 131 (Figur 2) wird vorliegend durch eine einzige, nicht abgebildete Fotodiode realisiert, die gleichzeitig vorteilhaft eine Umwandlung der optischen Empfangssignale s1', sr' in entsprechende elektrische Signale vornimmt. Der durch die Fotodiode in Reaktion auf die ihr zugeführten optischen Empfangssignale s1', sr' erhaltene Fotostrom entspricht demnach dem vorstehend beschriebenen Summensignal a1 (Figur 2).

In den in Figur 3a durch geschweifte Klammern markierten Zeitbereichen T1, T2, T3, T4 des Summensignals a1 sind deutlich Impulse erkennbar, die sich durch Laufzeiteffekte des Sendesignals s1 in der ersten Übertragungsstrecke 190a und der damit einhergehenden Phasenverschiebung ergeben. Die Phasenverschiebung ist proportional zu dem Abstand zwischen dem Sensormodul 500 und reflektierenden Partikeln auf der Windschutzscheibe 600, so dass aus der Phasenverschiebung auf eine Verschmutzung der Windschutzscheibe 600 geschlossen werden kann. Bei hinreichender Präzision der Erfassung der Phasenverschiebung kann durch das erfindungsgemäße Verfahren sogar zwischen einer innen- und einer außenseitigen Verschmutzung bzw. Beaufschlagung der Windschutzscheibe 600 mit reflektierender Materie unterschieden werden. Die Maximierung der Empfindlichkeit des erfindungsgemäßen Verfahrens bezüglich Phasenverschiebungen ist weiter unten detailliert beschrieben.

Das Summensignal a1 wird neben einer geeigneten Verstärkung durch den der Fotodiode 131 nachgeordneten Verstärker 132 (Figur 2) bevorzugt nur in den Zeitbereichen T1, T2, T3, T4 ausgewertet, um Informationen über die Phasendifferenz zu erhalten, weil insbesondere diese Zeitbereiche T1, T2, T3, T4 bei den verwendeten rechteckförmigen Sendesignalen s1, sr die interessierende Information bezüglich der Phasendifferenz aufweisen.

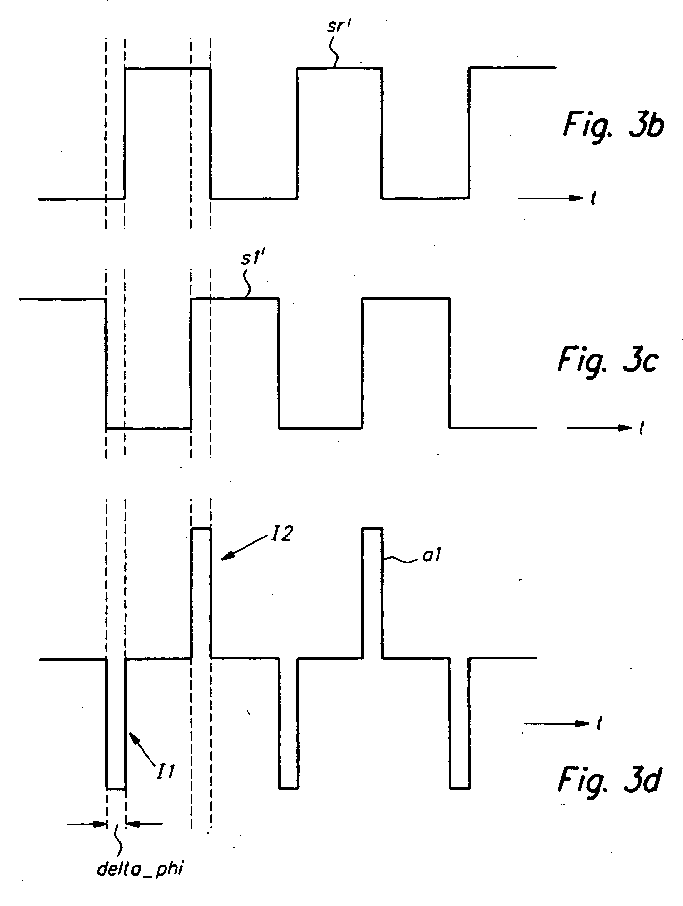

Die Figuren 3b bis 3c zeigen hierzu jeweils schematisch zwei rechteckförmige Signale, wobei in Figur 3b z.B. das an dem Ausgang der Referenzübertragungsstrecke 190r (Figur 1) erhaltene Referenzempfängssignal sr' und in Figur 3c das an dem Ausgang der Übertragungsstrecke 190a (Figur 1) erhaltene Empfangssignal s1' abgebildet ist. Die Amplituden der betrachteten Signale sr, s1 interessieren vorliegend nicht und werden daher als gleich groß angenommen. Dementsprechend kompensieren sich die beiden Signale sr', s1' nahezu zu einem zeitlich konstanten Summensignal a1, vgl. Figur 3d, wobei sich jedoch aufgrund der Laufzeitunterschiede der Signale s1, sr in den unterschiedlichen Übertragungsstrecken 190a, 190r die in Figur 3d mit den Bezugszeichen I1, I2, .. angedeuteten Impulse ergeben, deren Breite von der laufzeitbedingten Phasendifferenz delta_phi der Signale sr, s1 bzw. s1', sr' abhängt.

Verschiedene, dem Fachmann bekannte Effekte wie z.B. ein Tiefpassverhalten beteiligter Komponenten führen sowohl innerhalb der Übertragungsstrecken 190a, 190r als auch z.B. in der Fotodiode 131 und dem Verstärker 132 zu einem "Verschleifen" der in den Figuren 3b bis 3d dargestellten idealen Rechtecksignale, so dass sich für die Impulse I1, I2, bei einem realen System die in Figur 3a in den Zeitbereichen T1, T2, .. angegebene Signalform ergibt.

Aufgrund der großen Lichtgeschwindigkeit kann die Impulsbreite der entsprechenden Impulse bei geringen Abständen D von z.B. wenigen Dezimetern oder weniger Werte im Nanosekundenbereich annehmen.

Um eine entsprechend schnelle Auswertung und eine dementsprechend erforderliche Verwendung hinreichend schneller Bauelemente in der Sensorvorrichtung 100 bzw. in der Auswerteeinheit 130 zu vermeiden, kann die Auswertung des Summensignals a1, a2 erfindungsgemäß bevorzugt dadurch erfolgen, dass mehrere Impulse aus aufeinanderfolgenden Zeitbereichen T1, T2, T3, T4 (Figur 3a) integriert bzw. addiert werden, was bevorzugt durch analoge Schaltungskomponenten erfolgen kann. Das entsprechend erhaltene integrierte Signal ist Untersuchungen der Anmelderin zufolge bei einer Auswertung z.B. einiger zehn Impulse trotz verhältnismäßig kleiner Phasendifferenzen aufgrund der hohen Lichtgeschwindigkeit - durch herkömmliche CMOS-Auswerteschaltungen, vgl. die Elemente 133, 134, auswertbar. Die Integration des Summensignals a1 bzw. des verstärkten Summensignals a2 findet bevorzugt ebenfalls in den Auswerteschaltungen 133, 134 statt.

Das erfindungsgemäße Verfahren ermöglicht demnach die Auswertung von Lichtlaufzeiten des ersten Sendesignals s1 mit wenig aufwändigen Schaltungen und bei einer Präzision, die eine Abstandsmessung im Bereich zwischen etwa einigen Millimetern - bei geeigneter Anzahl von Integrationen - und etwa mehreren zehn Metern zulässt.

Analog zu der Auswertung der Phaseninformationen kann die Auswertung der Amplituden der empfangenen Signale s1', sr' bzw. des daraus gebildeten Summensignals a1 z.B. nur in vorgebbaren Zeitbereichen T5, T6, T7, T8 (Figur 3a) erfolgen. Das Sendesignal s1 unterliegt in Abhängigkeit der Verschmutzung bzw. Beaufschlagung der Windschutzscheibe 600 (Figur 4) mit Aerosol oder Regentropfen einer stärkeren Dämpfung als das Referenzsignal sr; diese unterschiedliche Dämpfung stellt sich in einer Abweichung des Summensignals a1 von einer Referenzamplitude (gestrichelte Zeitachse t in Figur 3a) dar und wird in den Zeitbereichen T5, T6, T7, T8, z.B. mittels Integration über mehrere Zeitbereiche T5, T6, T7, T8 ausgewertet. Analog zu der vorstehend beschriebenen Auswertung der Phasendifferenz kann die Empfindlichkeit der erfindungsgemäßen Auswertung auch hinsichtlich der Amplitudendifferenz durch die Integration entsprechender Zeitbereiche T5, T6, .. des Summensignals a1, a2 gesteigert werden.

Die vorstehend beschriebene Auswertung des Summensignals a1 erfolgt bevorzugt in den Funktionsblöcken 133, 134, denen eingangsseitig entsprechend das verstärkte Summensignal a2 zugeführt wird. An den Ausgängen der Funktionsblöcke 133, 134 stehen die Phasen- bzw. Amplitudendifferenz der empfangenen Signale s1', sr' repräsentierende Signale b1, b2 bereit.

Unter Verwendung dieser Signale b1, b2 können die das Referenzsignal sr beeinflussenden Filtermittel 120 (Figur 1) so angepasst werden, dass sich die empfangenen Signale s1', sr' trotz Dämpfung und Laufzeitunterschieden aufgrund der unterschiedlichen Übertragungsstrecken 190a, 190r wieder zu einem Gleichsignal ergänzen, wodurch ein ausgeregelter Zustand erreicht wird.

Da die Signale b1, b2 wie bereits beschrieben Informationen über eine Verschmutzung bzw. Beaufschlagung der Windschutzscheibe 600 (Figur 4) mit Aerosol oder Regentropfen enthalten, kann aus Ihnen z.B. unter Verwendung entsprechender Kennlinien oder Kennfelder auf den Verschmutzungsgrad usw. geschlossen werden.

Aufgrund der üblicherweise verhältnismäßig geringen Dicke der Windschutzscheibe 600 und der zur Erkennung von verschmutzungsbedingten Laufzeitunterschieden entsprechend erforderlichen hohen Genauigkeit bei der Auswertung von Phasendifferenzen wird bevorzugt eine Analyse der durch die Verschmutzung hervorgerufenen Amplitudendifferenz der Signale s1', sr' durchgeführt, die geringere Anforderungen an die Genauigkeit des Systems stellt und demnach auch nur mit wenigen oder völlig ohne Integrationszyklen über entsprechende Zeitbereiche T5, T6, .. des Summensignals a1, a2 auskommt.

Durch die erfindungsgemäße Analyse der Reflektivität der Windschutzscheibe 600 können anhand charakteristischer Reflexionsmuster insbesondere auch Unterscheidungen hinsichtlich der Art der Verschmutzung getroffen werden.

Beispielsweise kann die Übertragungsstrecke 190a wie in Figur 5 abgebildet auch so ausgebildet sein, dass ein von der als Sender fungierenden Signalerzeugungseinheit.110 ausgesandtes Sendesignal s1 bei einer auf ihrer Außenoberfläche 600b unverschmutzten Windschutzscheibe 600 im Wege der Totalreflexion an der Phasengrenze im Bereich der Außenoberfläche 600b und der angrenzenden Umgebungsluft 605 auf die als Empfänger fungierende Auswerteeinheit 130 reflektiert wird, während bei einer mit Wasser (nicht gezeigt) benetzten Außenoberfläche 600b zumindest ein Teil s1* des Sendesignals s1 ohne Totalreflexion durch die Außenoberfläche 600b der Windschutzscheibe 600 hindurchtritt, weil die dem Fachmann bekannte Brechzahlbedingung für die Totalreflexion bei den nunmehr angrenzenden Medien Windschutzscheibe 600, Wasser nicht mehr erfüllt ist.

D.h., der Empfänger 130 wird bei einer außenseitigen Wasserbeaufschlagung der Windschutzscheibe 600 ein Empfangssignal s1' mit verringerter Amplitude - gegenüber dem trockenen Zustand - erfassen, weil ein Teil s1* des Sendesignals nicht im Wege der Totalreflexion zu dem Empfänger 130 gelangt. Neben dem Empfänger 130 können auch weitere nicht abgebildete Empfänger vorgesehen sein, um z.B. auch bereits an der Innenoberfläche 600a der Windschutzscheibe 600 reflektierte Anteile des Sendesignals s1 zu erfassen. Die weiteren Empfänger können dementsprechend relativ zu dem ersten Empfänger 130 eine andere Winkellage oder auch einen anderen Abstand zu dem Sender 110 bzw. dem interessierenden Bereich der Windschutzscheibe 600 aufweisen. Vorzugsweise bildet jeder der mehreren Empfänger zusammen mit dem einzigen Sender 110 eine erfindungsgemäße Übertragungsstrecke. Sofern der Sender 110 und die Empfänger 130 aufgrund der geometrischen Randbedingungen für die vorstehend beschriebenen Messverfahren nicht in einem gemeinsamen Gehäuse untergebracht werden können, kann vorteilhaft eine Vernetzung der einzelnen Komponenten mittels z.B. Bluetooth- oder ZigBee- konformen Nahbereichsfunknetzen erfolgen.

Alternativ oder zusätzlich zu den Komponenten 110, 130, die eine erste optische Sensorvorrichtung 100 bilden, kann das erfindungsgemäße Sensormodul 500 (Figur 4) auch mindestens eine weitere optische Sensorvorrichtung 101 aufweisen, deren Konfiguration im wesentlichen der bereits unter Bezugnahme auf Figur 4 beschriebenen Ausführungsform der Erfindung entspricht. Die Sensorvorrichtung 101 ist zur Detektion des Reflexionsvermögens der Innenoberfläche 600a der Windschutzscheibe 600 vorgesehen und kann damit z.B. kondensierende Feuchtigkeit oder auch eine anderweitige innenseitige Verschmutzung erkennen. Von der Sensorvorrichtung 101 erfasste Daten können erfindungsgemäß vorteilhaft zur Ansteuerung eines Lüftungssystems des Kraftfahrzeugs oder einer elektrischen Scheibenheizung oder auch eines Signalgebers verwendet werden, der eine beschlagene Scheibe z.B. optisch oder akustisch anzeigt.

Eine der weiteren optischen Sensorvorrichtung 101 zugeordnete und nicht in Figur 5 abgebildete Fokussieroptik stellt sicher, dass der Brennpunkt der optischen Anordnung direkt auf der Innenoberfläche 600a der Windschutzscheibe 600 liegt, so dass in anderen Bereichen auftretende Verschmutzungen oder allgemein Veränderungen der optischen Übertragungsstrecke 190a nicht oder nur unwesentlich in das Messergebnis eingehen. Eine derartige Fokussieroptik kann auch den Komponenten 110, 130 der ersten optischen Sensorvorrichtung 100 oder generell jeder weiteren möglichen Sensorvorrichtung des erfindungsgemäßen Sensormoduls 500 zugeordnet sein.

Figur 5 zeigt darüberhinaus eine dritte optische Sensorvorrichtung 102, deren ebenfalls nicht abgebildete Fokussieroptik so eingestellt ist, dass ein im Bereich der Außenoberfläche 600b befindlicher Abschnitt der Windschutzscheibe 600 insbesondere hinsichtlich seiner Reflexionseigenschaften untersuchbar ist.

Eine Unterscheidung zwischen einer (außenseitigen) Beaufschlagung der Windschutzscheibe 600 mit Regen oder Schmutz kann erfindungsgemäß vorteilhaft in Abhängigkeit einer erfassten Zeitkonstante der Veränderung z.B. des Reflexionsvermögens oder auch von erfassten Phasendifferenzen getroffen werden, wobei bei verhältnismäßig schnellen Änderungen, z.B. im Sekundenbereich, vorzugsweise auf Regen geschlossen wird, und wobei z.B. bei sich langsamer ergebenden Veränderungen auf eine kontinuierlich steigende Verschmutzung z.B. durch sich absetzenden Staub usw. geschlossen wird.

Das erfindungsgemäße Sensormodul 500 ermöglicht aufgrund seiner entfernt von der Scheibe 600 erfolgenden Anordnung auch eine einfache Beobachtung mehrerer verschiedener Bereiche der Scheibe 600 oder sogar unterschiedlicher Scheiben. In diesem Fall kann insbesondere die Regenerkennung einen Plausibilisierungsprozess umfassen, der die Wasserbeaufschlagung unterschiedlicher Scheiben miteinander vergleicht.

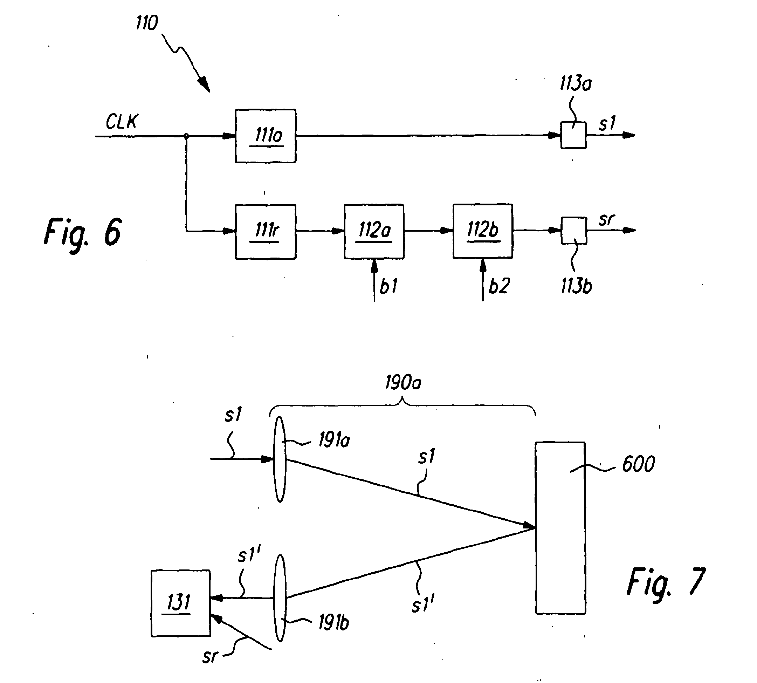

Die über die Übertragungsstrecken 190a, 190r (Figur 1) zu übertragenden Signale s1, sr werden vorteilhaft in Abhängigkeit eines zentralen Taktsignals CLK der Sensorvorrichtung 100 gebildet, das hierzu entsprechenden Signalgeneratoren 111a, 111r der in Figur 6 abgebildeten Ausführungsform der Signalerzeugungseinheit 110 zugeführt ist.

Bei dem Taktsignal CLK kann es sich bevorzugt beispielsweise um ein Rechtecksignal mit einer Taktfrequenz von etwa 100 kHz handeln, und die Signalgeneratoren 111a, 111r können als Treiberbausteine ausgebildet sein, wobei der Signalgenerator 111r eine Invertierung des Taktsignals CLK vorsieht, um die erwünschte Phasenverschiebung des Referenzsignals sr von 180° zu dem ersten Sendesignal s1 zu erzielen.

Anstelle der in Figur 1 außerhalb der Signalerzeugungseinheit 110 angeordneten Filtermittel 120 können vorteilhaft auch in die Signalerzeugungseinheit 110 integrierte Filtermittel vorgesehen sein, die gemäß Figur 6 einen Phasenschieber 112a und/oder einen steuerbaren Verstärker 112b umfassen.

Dem Phasenschieber 112a ist beispielsweise das die Phasendifferenz der empfangenen Signale s1', sr' repräsentierende Signal b1 (vgl. Figur 2) zugeführt, um die vorstehend beschriebene Phasenregelung mit dem Ziel der Erreichung eines Gleichsignals für das Summensignal a1 (Figur 2, 3a) auszuführen.

Analog hierzu ist dem steuerbaren Verstärker 112b das die Amplitudendifferenz der empfangenen Signale s1', sr' repräsentierende Signal b2 zugeführt, um die vorstehend beschriebene Amplitudenregelung - ebenfalls mit dem Ziel der Erreichung eines Gleichsignals für das Summensignal a1 (Figur 2, 3a) - auszuführen.

Die Funktionsblöcke 113a, 113b symbolisieren Ansteuerschaltungen einschließlich entsprechender elektrooptischer Wandler wie z.B. Leuchtdioden, an deren Ausgängen das betreffende optische Signal s1, sr zur Übertragung über die jeweilige Übertragungsstrecke 190a, 190r (Figur 1) verfügbar ist.

Die als Freiraum-Übertragungsstrecke ausgebildete erste Übertragungsstrecke 190a umfasst bevorzugt eine in Figur 7 schematisch durch bikonvexe Linsen 191a, 191b dargestellte Sende- und Empfangsoptik zur Abbildung des Signals s1 auf den zu beobachtenden Bereich der Windschutzscheibe 600, bzw. zur Abbildung eines an der Windschutzscheibe 600 reflektierten, empfangenen Signals s1' auf die Fotodiode 131.

Die Referenz-Übertragungsstrecke 190r (Figur 1) kann bevorzugt so ausgebildet sein, dass eine das Referenzsignal sr abgebende Leuchtdiode direkt in die Fotodiode 131 strahlt. Anstelle einer optischen Realisierung kann die Referenz-Übertragungsstrecke 190r auch rein elektronisch ausgebildet sein. In diesem Fall wird das Referenzsignal beispielsweise dem Fotostrom der Fotodiode 131 in Form eines Referenzstroms mit der erfindungsgemäß vorgesehenen Signalform addiert.

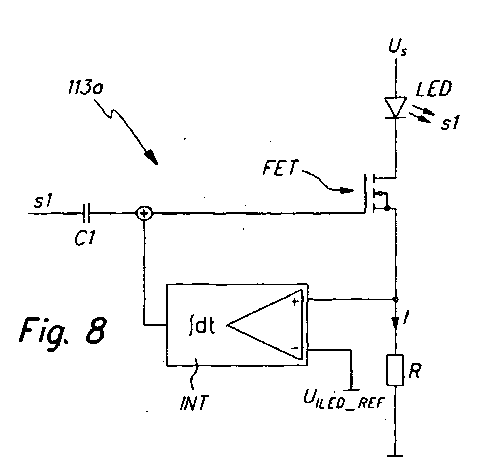

Die in Figur 6 abgebildeten Ansteuerschaltungen 113a, 113b besitzen einer vorteilhaften Ausführungsform zufolge die in Figur 8 abgebildete Struktur, wonach beispielhaft der Ansteuerschaltung 113a eingangsseitig ein Wechselanteil des Sendesignals s1 bzw. eines dem Sendesignal s1 entsprechenden elektrischen Signals über einen Koppelkondensator C1 zuführbar ist. Der Maximalstrom für den als Leuchtdiode ausgebildeten elektrooptischen Wandler LED ist durch die Wahl des Ohmwiderstands R festgelegt, der gleichzeitig auch als Shunt zur Messung des durch die Leuchtdiode LED fließenden Stroms I dient.

Der erfindungsgemäß ebenfalls in der Ansteuerschaltung 113a vorgesehene Integrierer INT erfasst den durch die Leuchtdiode LED fließenden Strom I und regelt diesen über den Feldeffekttransistor FET auf einen konstanten Mittelwert, um zu verhindern, dass sich Temperaturschwankungen der Leuchtdiode LED aufgrund unterschiedlicher Eigenerwärmung ergeben, wodurch eine besonders hohe Präzision bei der Erzeugung des optischen Signals s1 erzielt wird.

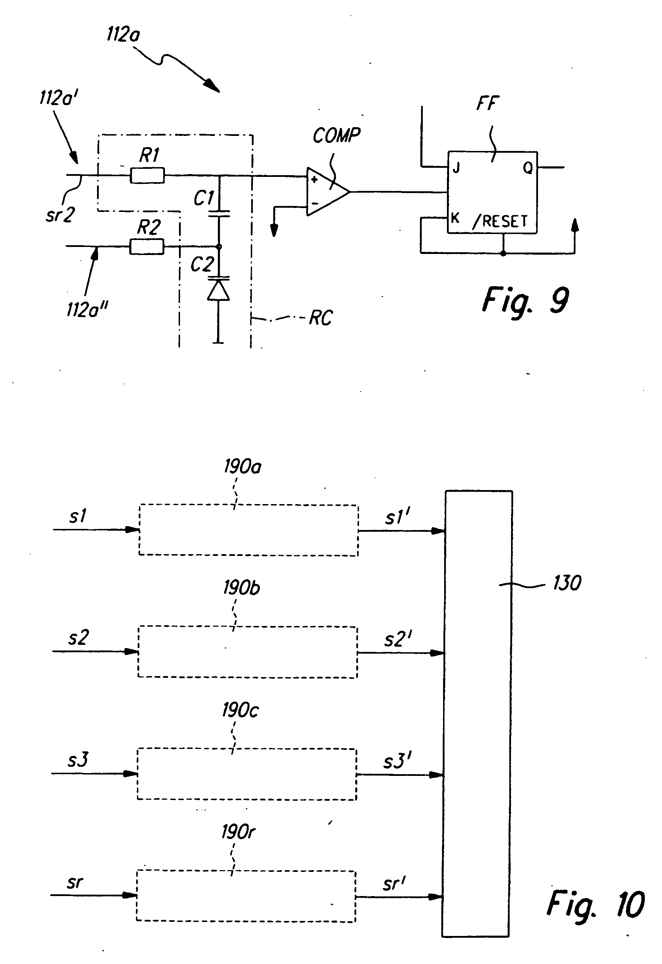

Eine besonders bevorzugte Ausführungsform für den in der Signalerzeugungseinheit 110 (Figur 1) enthaltenen Phasenschieber 112a ist nachfolgend unter Bezugnahme auf Figur 9 beschrieben.

Der Phasenschieber 112a ist dazu vorgesehen, ein ihm eingangsseitig zugeführtes Rechtecksignal, bei dem es sich beispielsweise um das Referenzsignal sr (Figur 1) bzw. eine entsprechende Vorstufe sr2 handeln kann, um einen vorgebbaren Phasenwinkel zu verzögern.

Hierzu weist der Phasenschieber 112a an seinem Eingang 112a' eine RC-Kombination RC auf, die eine steuerbare Zeitkonstante realisieren kann. Vorliegend ist die RC-Kombination RC hierzu aus dem Ohmwiderstand R1 und zwei kapazitiven Elementen C1, C2 gebildet, wobei das erste kapazitive Element C1 ein Kondensator ist und wobei das zweite kapazitive Element C2 eine Kapazitätsdiode C2 ist. Bei der vorliegenden Konfiguration kann die Zeitkonstante der RC-Kombination RC durch Änderung einer Steuerspannung beeinflusst werden, die der Kapazitätsdiode C2 über den Anschluss 112a'' und den Ohmwiderstand R2 zuführbar ist. Vorteilhaft kann dem Anschluss 112a'' ein von dem Signal b1 (vgl. Figur 2) abhängiges Signal oder auch direkt das Signal b1 zugeführt werden, so dass die mittels der Auswerteeinheit 130 erhaltene Information über die Phasenverschiebung der Signale s1', sr' direkt zur Steuerung des Phasenschiebers 112a nutzbar ist.

Das durch die RC-Kombination RC verzögerte Signal wird durch den nachgeschalteten Komparator COMP, dem an einem Eingang ferner eine vorgebbare Referenzspannung zugeführt ist, schließlich wieder in ein Rechtecksignal umgewandelt.

Bevorzugt wird dem Phasenschieber 112a an seinem Eingang ein Rechtecksignal sr2 zugeführt, das die doppelte Frequenz des Referenzsignals sr aufweist. Auf diese Weise erhält der Phasenschieber 112a und insbesondere auch der Komparator COMP dementsprechend nur steigende Flanken des Rechtecksignals mit der für das Referenzsignal sr vorgesehenen Frequenz, wodurch Verzerrungen bei der Bildung des auszugebenden Rechtecksignals in dem Komparator COMP aufgrund von Hystereseeffekten vermieden werden. Derartige Verzerrungen würden u.a. eine unterschiedliche Verzögerung steigender Flanken und fallender Flanken des verarbeiteten Signals bewirken und demnach die Stellgenauigkeit des Phasenschiebers 112a erheblich beeinträchtigen, was sich negativ auf die Empfindlichkeit der Sensorvorrichtung 100 auswirkt. Durch die erfindungsgemäße Verwendung eines Rechtecksignals sr2 mit der doppelten Frequenz ist sichergestellt, dass z.B. alle steigenden Flanken dieselbe Verzögerung, d.h. Phasenverschiebung, erfahren. Ein dem Komparator COMP nachgeordneter Frequenzteiler FF, der vorliegend als JK-FlipFlop ausgebildet ist, setzt das verzögerte Signal wieder auf die für das Referenzsignal sr erwünschte Frequenz herunter, wodurch an dem Ausgang Q des JK-Flip-Flops FF ein Rechtecksignal mit der erforderlichen Frequenz und der vorgegebenen Phasenverschiebung erhalten wird. Zur Synchronisation mit dem Taktsignal CLK (Figur 6) des gesamten Systems kann der J-Eingang des JK-Flip-Flops FF in geeigneter, dem Fachmann bekannter Weise, mit einem weiteren Steuersignal beaufschlagt werden, das vorzugsweise direkt aus dem Taktsignal CLK abgeleitet ist.

Anstelle der Kapazitätsdiode C2 kann dem Phasenschieber 112a auch eine steuerbare Matrix aus Ohmwiderständen bzw. Kondensatoren (CDAC) zugeordnet sein, die unter digitaler Ansteuerung die Einstellung verschiedener Zeitkonstanten für die RC-Kombination ermöglicht, indem, beispielsweise mittels Analogschaltern usw., unterschiedliche Schaltungskonfigurationen hergestellt werden. Zur Realisierung eines möglichst großen Stellbereichs für die Zeitverzögerung sind die Bauteilwerte für die einzelnen Ohmwiderstände bzw. Kondensatoren vorzugsweise binär abzustufen. Die Ansteuerung der Matrix kann vorteilhaft direkt über eine Recheneinheit, z.B. einen Mikrocontroller oder digitalen Signalprozessor (DSP) erfolgen, die auch die Auswertung der Signale b1, b2 sowie die Steuerung der weiteren Komponenten der Sensorvorrichtung 100 durchführt.

Anstelle rechteckförmiger Signale s1, sr können auch sinusförmige Signale oder sonstige vorzugsweise periodische Signale zur Übertragung über die Übertragungsstrecken 190a, 190r verwendet werden, die sich in einem ausgeregelten Zustand zu einem Gleichsignal ergänzen können, was eine einfache Erkennung des ausgeregelten Zustands ermöglicht. In diesem ausgeregelten Zustand sind die Informationen über das Reflexionsvermögen bzw. eine Verschmutzung oder die Anwesenheit eines Aerosols im Bereich der Windschutzscheibe 600 direkt in den Größen b1, b2 (Figur 2) enthalten.

Es ist ferner denkbar, dass solche Signale zur Übertragung über die Übertragungsstrecken 190a, 190r verwendet werden, die sich - in einem ausgeregelten Zustand - nicht zu einem Gleichsignal ergänzen. Zur erfolgreichen Durchführung des erfindungsgemäßen Verfahrens ist es ausreichend, wenn die empfangenen Signale bzw. ein hieraus abgeleitetes Signal wie z.B. das Summensignal a1 (Figur 2) eine bestimmte Signalform aufweist, die den ausgeregelten Zustand möglichst einfach erkennen lässt. In diesem Fall ist bereits die Gewinnung von Informationen über Laufzeit- bzw. Phasendifferenzen und damit z.B. die Abstands- und Reflexionsmessung möglich.

Bevorzugt sind die Signale s1, sr jedoch so gewählt, dass eine Empfindlichkeit der Abweichung gegenüber der bestimmten Signalform, die den ausgeregelten Zustand kennzeichnet, in Abhängigkeit der Laufzeitunterschiede bzw. Reflexion/Dämpfung möglichst groß ist, um die Auflösung des erfindungsgemäßen Messverfahrens zu maximieren. Derartige Signalformen sind bereits unter Bezugnahme auf die Figuren 3b bis 3d beschrieben worden. Bei den beschriebenen, zueinander inversen Rechtecksignalen genügt bereits eine minimale Phasendifferenz, um einen Impuls I1, I2 mit verhältnismäßig großer Amplitude zu erzeugen, dessen Signalenergie im Wege der beschriebenen Integration über mehrere Impulse auch durch verhältnismäßig schmalbandige Empfänger bzw. Auswerteschaltungen genutzt werden kann.

Bei der Verwendung von rechteckförmigen Signalen s1, sr können diese vorteilhaft direkt aus einem Rechtecksignal CLK (Figur 6) eines Oszillators abgeleitet werden, der beispielsweise den Referenztakt für die Sensorvorrichtung 100 erzeugt.

Alternativ hierzu ist die Erzeugung der Signale s1, sr vorteilhaft auch durch direkte digitale Synthese (DDS) möglich, bei der z.B. ein in einem Speicher abgelegter Signalverlauf zur Erzeugung der Signale s1, sr mittels eines Digital-Analog-Wandlers verwendet wird. Durch Verwendung des DDS-Prinzips können beliebige Kurvenformen gebildet werden.

Bei einer weiteren sehr vorteilhaften Ausführungsform der vorliegenden Erfindung ist vorgesehen, mehrere Übertragungsstrecken zu verwenden, vgl. Figur 10. Anstelle einer einzigen Freiraum-Übertragungsstrecke 190a, wie sie bei der Ausführungsform gemäß Figur 1 vorgesehen ist, weist die vorliegende Ausführungsform der erfindungsgemäßen Sensorvorrichtung 100 wie aus Figur 10 ersichtlich zusätzlich zu der Referenz-Übertragungsstrecke 190r drei Übertragungsstrecken 190a, 190b, 190c auf, die vorzugsweise alle als Freiraum-Übertragungsstrecken ausgebildet sind.

Die den unterschiedlichen Übertragungsstrecken 190a, 190b, 190c zugeführten Signale s1, s2, s3 können einer ersten - auf Rechtecksignalen basierenden - Erfindungsvariante zufolge jeweils als Rechtecksignal ausgebildet sein, wobei das betreffende Signal s1, s2, s3 jeweils eine Phasenverschiebung von 180° zu dem ebenfalls als Rechtecksignal ausgebildeten Referenzsignal sr aufweist. Alternativ können neben Rechtecksignalen auch die vorstehend beschriebenen weiteren Signalformen verwendet werden, die die erfindungsgemäße Auswertung durch die Auswerteeinheit 130 ermöglichen.

Die in Figur 10 abgebildete Konfiguration kann beispielsweise derart betrieben werden, dass zeitlich aufeinanderfolgend jeweils nur eine der drei Übertragungsstrecken 190a, 190b, 190c zusammen mit der Referenz-Übertragungsstrecke 190r verwendet wird, wobei sich für die Auswertung die bereits beschriebene Verfahrensweise ergibt.

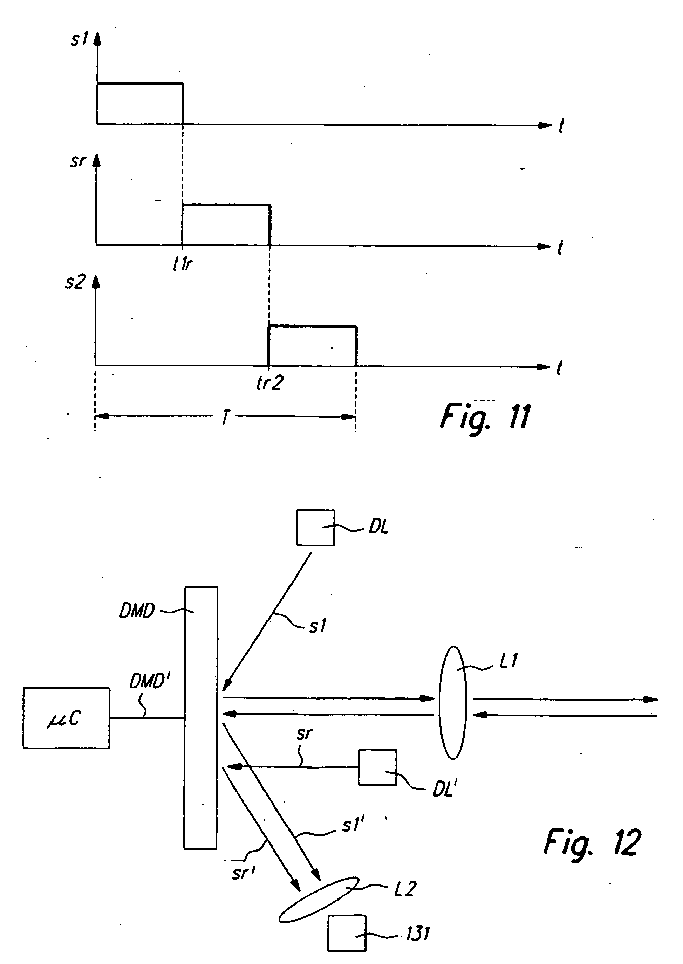

Es ist darüberhinaus auch denkbar, mehr als eine der drei Übertragungsstrecken 190a, 190b, 190c, z.B. die Übertragungsstrecken 190a, 190b, gleichzeitig zusammen mit der Referenz-Übertragungsstrecke 190r zu verwenden. In diesem Fall kann beispielsweise vorgesehen sein, dass die Signale s1, s2, sr wiederum Rechteckform aufweisen, vgl. Figur 11, wobei jedes Signal s1, s2, sr allerdings nicht für die halbe Periodendauer T, d.h. für 180°, sondern nur für ein Drittel der Periodendauer, d.h. für 120°, einen von Null verschiedenen Amplitudenwert aufweist. Bei einer geeigneten Phasenverschiebung der Signale s1, s2, sr von jeweils 120° zueinander, können sich die sich ergebenden Empfangssignale s1', s2', sr' an den Ausgängen der Übertragungsstrecken 190a, 190b, 190r vorteilhaft - in dem ausgeregelten Zustand - wieder zu einem Gleichsignal überlagern.

Bei der vorstehend beschriebenen gleichzeitigen Verwendung mehrerer nicht als Referenz-Übertragungsstrecke 190r ausgelegter Übertragungsstrecken 190a, 190b ist vorteilhaft jeder Übertragungsstrecke 190a, 190b ein eigener Phasenschieber und ein eigener Verstärker zugeordnet, um die entsprechenden Signale s1, s2 gegenüber dem vorzugsweise nicht derartig beeinflussten Referenzsignal sr hinsichtlich ihrer Phase bzw. Amplitude zu verändern.

Eine Auswertung einer sich aufgrund von Laufzeiteffekten des Signals s1 ergebenden Überlappung zwischen dem empfangenen Signal s1' und dem empfangenen Referenzsignal sr' kann zu dem in Figur 11 angedeuteten Zeitpunkt t1r vorgenommen werden, während eine vergleichbare Auswertung für das empfangene Signal s2' zu dem Zeitpunkt tr2 stattfindet.

Durch die vorstehend beschriebene Variante des erfindungsgemäßen Verfahrens können unter Verwendung eines einzigen Referenzsignals sr vorteilhaft gleich zwei oder mehr Übertragungsstrecken 190a, 190b zur Reflexions- und/oder Abstandsmessung genutzt werden, so dass bei entsprechender Auslegung der Freiraum-Übertragungsstrecken z.B. sich in unterschiedliche Raumrichtungen erstreckende Bereiche, z.B. auch verschiedene Scheiben des Kraftfahrzeugs erfasst werden können.

Bei mehr als zwei gleichzeitig eingesetzten Referenzsignalen sr können zur Auswertung vorteilhaft die Überlappungen eines ersten Signals s1 mit dem Referenzsignal sr zu einer Überlappung eines weiteren Signals s3 mit dem ersten Signal s1 oder dergleichen in Beziehung gesetzt werden. Zur Steigerung der Präzision können jedoch auch mehrere Referenzsignale erzeugt und verwendet werden, deren nichtverschwindende Signalwerte bevorzugt zeitlich zwischen den nichtverschwindenden Signalwerten von Nicht-Referenzsignalen s1, s2, s3 angeordnet werden, so dass sich die zu analysierenden laufzeitbedingten Überlappungen jeweils zwischen einem Nicht-Referenzsignal s1, s2, s3 und einem Referenzsignal sr ergeben.

Der Prozess des Ausregelns durch Anpassung der Phasenverschiebungen bzw. Amplituden der Signale s1, s2, s3, sr kann als mehrdimensionaler Optimierungsprozess aufgefasst werden, bei dem bevorzugt zunächst die Ausregelung der Amplituden erfolgt, um die Empfindlichkeit bei einer sich anschließenden Ausregelung der Phasenverschiebungen zu steigern. Sofern allein das Reflexionsvermögen einer Scheibe bzw. eines entsprechenden Bereichs interessiert, reicht es prinzipiell aus, die Amplituden der empfangenen Signale auszuregeln.

Alternativ hierzu ist es jedoch auch denkbar, zunächst die Phasenverschiebung zwischen einem Signal s1 und dem Referenzsignal sr auszuregeln, was z.B. dadurch erfolgen kann, dass die Fläche der sich in den Zeitbereichen T1, T2, .. (Figur 3a) ergebenden Impulse (vgl. auch I1, I2 aus Figur 3d), d.h. das entsprechende Zeitintegral über dem Summensignal a1 (Figur 2) in den betreffenden Zeitbereichen, durch eine entsprechende Phasenverschiebung des Signals s1 oder sr minimiert wird.

Der aufgrund von Amplitudenunterschieden zwischen den empfangenen Signalen s1', sr' in den Zeitbereichen T1, T2, .. auftretende Beitrag zu dem Zeitintegral über dem Summensignal a1, der zur Ermittlung der Phasenverschiebung an sich unerwünscht ist, kann vorteilhaft durch eine Auswertung des Summensignals in den Zeitbereichen T5, T6, .. berücksichtigt und entsprechend aus den Integralwerten für die Zeitbereiche T1, T2, .. eliminiert werden.

Neben der Verwendung von Leuchtdioden als elektrooptische Wandler zur Erzeugung optischer Signale sind u.a. auch Laserdioden einsetzbar. Ganz besonders bevorzugt werden oberflächenemittierende Diodenlaser, VCSEL (vertical cavity surface emitting laser) verwendet, die besonders klein bauen und einen verhältnismäßig geringen Strahlquerschnitt aufweisen. Beispielsweise können VCSEL-Diodenlaser des Typs SFH 4020 von OSRAM verwendet werden.

Bei einer weiteren sehr vorteilhaften Ausführungsform der vorliegenden Erfindung ist mindestens eine steuerbare Mikrospiegeleinrichtung in einer der Übertragungsstrecken 190a, 190b, 190c, 190r oder eingangs- bzw. ausgangsseitig hiervon vorgesehen. Dadurch kann vorteilhaft der Strahlengang der betreffenden Übertragungsstrecke 190a, 190b, 190c, 190r beeinflusst werden.

Die erfindungsgemäße Mikrospiegelanordnung weist vorzugsweise mindestens ein Array von steuerbaren Mikrospiegeln auf, insbesondere digital steuerbare Mikrospiegel (DMD, digital micromirror device).

In der Figur 12 ist beispielhaft schematisch eine erfindungsgemäße Konfiguration abgebildet, die eine Mehrzahl von DMD-Einheiten aufweist, welche vorliegend insgesamt durch den Funktionsblock DMD symbolisiert sind.

Die verschiedenen DMD-Einheiten DMD sind Bestandteil einer ersten Übertragungsstrecke 190a (Figur 1), die zwischen einem optischen Sender, z.B. einem VCSEL-Diodenlaser DL, einer in Figur 12 durch eine bikonvexe Linse L1 symbolisierten ersten Optik, einem nicht abgebildeten, zumindest teilweise reflektierenden, Objekt wie z.B. einer Windschutzscheibe, einer in Figur 12 durch eine bikonvexe Linse L2 symbolisierten zweiten Optik und der Fotodiode 131 verläuft. Über die erste Übertragungsstrecke 190a wird vorliegend ein erstes optisches Signal s1 übertragen, das in der bereits beschriebenen Weise zumindest teilweise an der Windschutzscheibe 600 reflektiert und der Fotodiode 131 als empfangenes Signal s1' zugeführt wird.

Die verschiedenen DMD-Einheiten DMD sind vorteilhaft ferner Bestandteil einer zweiten Übertragungsstrecke, der Referenz-Übertragungsstrecke 190r (Figur 1), die zwischen einem weiteren optischen Sender, z.B. einem VCSEL-Diodenlaser DL', und der zweiten Optik L2 und der Fotodiode 131 verläuft. Über die zweite Übertragungsstrecke 190r wird vorliegend das optische Referenzsignal sr übertragen, das ebenfalls der Fotodiode 131 zugeführt wird, nämlich als empfangenes Referenzsignal sr'.

Anstelle der Diodenlaser DL, DL' kann als optische Signalquelle jeweils z.B. auch eine Leuchtdiode oder eine andere geeignete Lichtquelle verwendet werden.

Die DMD-Einheiten DMD sind über eine Schnittstelle DMD', bei der es sich beispielsweise um eine serielle Schnittstelle, z.B. eine SPI (serial peripheral interface)-Schnittstelle handeln kann, mit einer sie steuernden Recheneinheit µC, z.B. mit einem Mikrocontroller, verbunden und können bei entsprechender Ansteuerung die Übertragungsstrecken 190a, 190r beeinflussen.

Beispielsweise ist mindestens eine DMD-Einheit so konfiguriert, dass sie das von dem Diodenlaser DL erzeugte optische Signal s1 in Richtung der ersten Optik L1, d.h. auf die Windschutzscheibe 600 zu, reflektiert. Mindestens eine weitere DMD-Einheit ist so konfiguriert, dass sie das an der Windschutzscheibe 600 reflektierte und in der Figur 12 von rechts nach links durch die erste Optik L1 tretende optische Signal in Richtung der zweiten Optik L2 und damit auf die Fotodiode 131 reflektiert.

Mindestens noch eine weitere DMD-Einheit reflektiert das von dem Diodenlaser DL' erzeugte optische Referenzsignal sr ebenfalls in Richtung der zweiten Optik L2 und damit auf die Fotodiode 131.

Die erfindungsgemäße Verwendung von DMD-Einheiten ermöglicht bei den erfindungsgemäß verwendeten optischen Übertragungsstrecken einerseits eine flexiblere Anordnung der Komponenten DL, DL', L1, L2, z.B. durch eine Faltung des entsprechenden Strahlengangs, so dass insgesamt sehr klein bauende Sensorvorrichtungen 100 vorgesehen werden können. Darüberhinaus ist es auch möglich, z.B. ein bestimmtes Sendesignal abwechselnd gezielt auf verschiedene Optiken bzw. Bereiche der Windschutzscheibe 600 oder auf die Fotodiode 131 zu reflektieren und somit unter Verwendung einer einzigen Lichtquelle DL gleichzeitig zwei oder mehr Übertragungsstrecken zu betreiben bzw. eine Mehrzahl von Scheiben zu überwachen.

Zu Kalibrierungszwecken kann ferner vorgesehen sein, das von dem Diodenlaser DL stammende Licht s1 direkt auf die Fotodiode 131 umzulenken, usw.

Durch eine entsprechende Ansteuerung von DMD-Einheiten ist es darüberhinaus auch möglich, die reflektierte Lichtmenge zu beeinflussen, wodurch auch eine Dämpfung eines optischen Signals realisierbar ist. Ferner können optische Signale unterschiedlicher Wellenlänge, die z.B. von mehreren nebeneinander angeordneten Lichtquellen stammen, wahlweise z.B. in Richtung der zu beobachtenden Scheibe reflektiert werden.

Besonders vorteilhaft kann die Anordnung der in Figur 12 abgebildeten Komponenten derart erfolgen, dass sowohl das empfangene Signal s1' als auch das empfangene Referenzsignal sr' in exakt denselben Bereich der Fotodiode 131 eingestrahlt werden, vorzugsweise auch unter möglichst demselben Winkel, wodurch die Präzision bei der Erfassung der betreffenden Signale s1', sr' gesteigert wird und nichtlineare Effekte in dem Halbleiterelement der Fotodiode 131 vermieden werden.

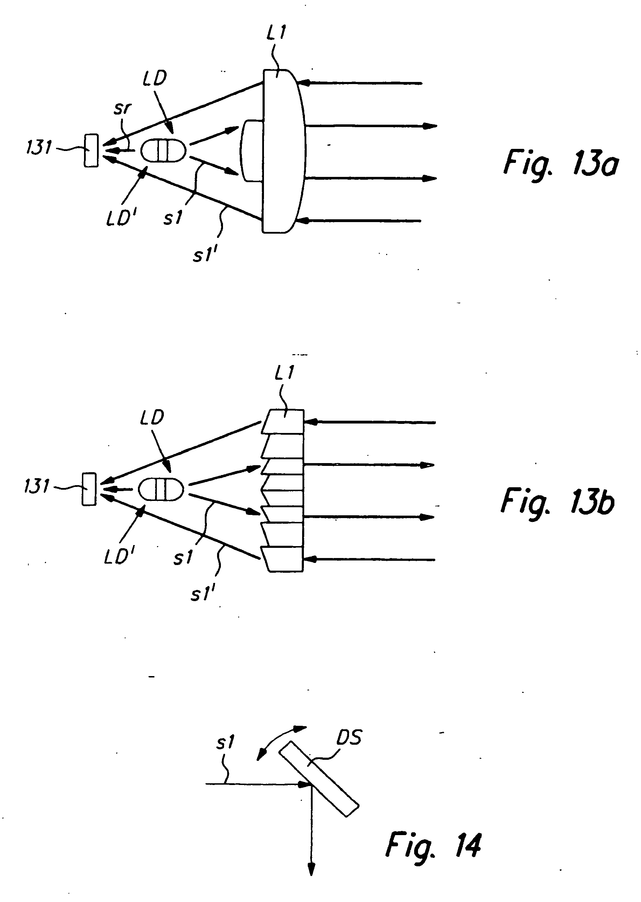

Die Figuren 13a, 13b geben zwei weitere erfindungsgemäße Konfigurationen zur Realisierung von Teilen der optischen Übertragungsstrecken 190a, 190r (Figur 1) an, die bevorzugt ohne DMD-Einheiten arbeiten.

Die in Figur 13a abgebildete Erfindungsvariante sieht als erste Optik L1 ein bifokales Linsensystem vor, das das Signal s1 des Diodenlasers bzw. einer Leuchtdiode LD in Richtung auf einen zu untersuchenden Bereich bündelt und gleichzeitig in dem Bereich z.B. an einer Scheibe, einem Aerosol oder an Schmutzpartikeln reflektiertes Licht s1' auf die Fotodiode 131 bündelt. Ein zur Erzeugung des Referenzsignals sr vorgesehener zweiter Diodenlaser bzw. eine Leuchtdiode LD' strahlt das optische Referenzsignal sr direkt in die Fotodiode 131 ein. Im Unterschied zu der in Figur 13a abgebildeten Erfindungsvariante sieht die Anordnung gemäß Figur 13b eine Fresnellinse als erste Optik L1 vor.

Eine weitere sehr vorteilhafte Ausführungsform des erfindungsgemäßen Verfahrens sieht die Verwendung mindestens eines Drehspiegels DS, vergleiche Figur 14, in mindestens einer der optischen Übertragungsstrecken 190a, 190b, 190c, 190r vor, der in Abhängigkeit eines Drehwinkels die Ausdehnung der betreffenden Übertragungsstrecke auf unterschiedliche Raumbereiche ermöglicht. Der Antrieb des Drehspiegels DS erfolgt beispielsweise mittels eines Schrittmotors oder anderer geeigneter, dem Fachmann bekannter Aktoren.

Bei einer weiteren sehr vorteilhaften Ausführungsform der vorliegenden Erfindung kann die Auswertung der empfangenen Signale s1', sr' (Figur 1) durch die Auswerteeinheit 130 eine Frequenzbereichsanalyse umfassen, bei der das verstärkte Summensignal a2 (Figur 2) z.B. allein auf eine Frequenzkomponente hin ausgewertet wird, die der Frequenz der verwendeten Signale s1, sr, entspricht. Da das Summensignal a1 bei dem ausgeregelten Zustand ein Gleichsignal darstellt, kann auf diese Weise wenig aufwändig ermittelt werden, ob der ausgeregelte Zustand erreicht ist.

In Abhängigkeit der Frequenzbereichsanalyse können die Filtermittel 120 (Figur 1) derart angesteuert werden, dass sich schließlich der ausgeregelte Zustand ergibt.

Bei einer anderen sehr vorteilhaften Ausführungsform der vorliegenden Erfindung ist eine im wesentlichen digitale Auswertung der empfangenen Signale s1', sr' durch die Auswerteeinheit 130 vorgesehen. Dementsprechend ist bei dieser Ausführungsform ein hinreichend breitbandiger Verstärker 132 (Figur 2) und ein dem Verstärker 132 nachgeordneter Analog-Digital-Wandler (nicht gezeigt) vorgesehen, der das verstärkte Summensignal a2 in entsprechende Digitalwerte umsetzt. Die Grenzfrequenz des Verstärkers 132 und der Fotodiode 131 sind in Abhängigkeit der gewünschten Empfindlichkeit des Auswerteverfahrens bezüglich der Phasendifferenz zwischen den empfangenen Signalen s1', sr' auszuwählen.

Insbesondere bei Reflexionsmessungen, die lediglich eine Auswertung von Amplitudendifferenzen erfordern, ist die digitale Auswertung zweckmäßig, weil im Vergleich zu der Ermittlung von Phasendifferenzen der Verstärker 132 und ein nachgeordneter Analog-Digital-Wandler keine derartig hohe Bandbreite erfordern, wie sie zur Erfassung der breitbandigen Impulse I1, I2, .. (Figur 3d) erforderlich ist. Sofern eine reine Amplitudenregelung durchgeführt werden soll, die eine Bestimmung des Reflexionsvermögens eines interessierenden Bereichs z.B. der Windschutzscheibe 600 ermöglicht, ist es ausreichend, die Grenzfrequenz der Komponenten 131, 132 so groß zu wählen, dass die sich im nicht ausgeregelten Zustand ergebenden Frequenzanteile des Summensignals a1 digital auswertbar sind.

Eine weitere sehr vorteilhafte Ausführungsform der vorliegenden Erfindung sieht eine Kombination optischer Übertragungsstrecken mit unterschiedlichen Wellenlängen vor.

Generell ist es nicht notwendig, dass die Referenz-Übertragungsstrecke 190r optische Übertragungswege aufweist. Vielmehr kann die Übertragungsstrecke 190r auch rein elektronisch ausgebildet sein und somit vorteilhaft direkt mit den weiteren elektronischen Komponenten der erfindungsgemäßen Sensorvorrichtung 100 zusammen in ein Gehäuse integriert werden, was eine besonders klein bauende Anordnung ergibt. Ein entsprechendes elektronisches Referenzsignal sr bzw. sr' wird direkt zu einem Photostrom der Fotodiode 131 bzw. einem daraus abgeleiteten, verstärkten Spannungssignal addiert.

Die vorstehend beschriebenen DMD-Einheiten DMD (Figur 12) bzw. der Drehspiegel DS (Figur 14) können besonders vorteilhaft dazu eingesetzt werden, eine erste Übertragungsstrecke der in dem Modul 500 (Figur 4) integrierten Sensorvorrichtung 100 in Richtung einer Windschutzscheibe 600 des Kraftfahrzeugs zu realisieren, während eine zweite Übertragungsstrecke so ausgebildet ist, dass eine Seitenscheibe des Kraftfahrzeugs auf eine Verschmutzung hin untersucht wird. Entsprechende Reflexionsgrade können z.B. im Zeitmultiplex erfasst und zur Regelung von Belüftungs- und/oder Fahrerassistenzsystemen oder dergleichen verwendet werden, wobei vorteilhaft nur eine einzige Sensorvorrichtung 100 bzw. ein Modul 500 erforderlich ist.

Generell ermöglicht die vorliegende Erfindung eine flexible und zuverlässige Detektion von Aerosolen und/oder Schmutz bzw. Regentropfen auf bzw. im Bereich einer Scheibe wie z.B. einer Windschutzscheibe 600 eines Kraftfahrzeugs. Das erfindungsgemäße Verfahren ist allerdings nicht auf die Detektion von Verschmutzungen einer Scheibe selbst beschränkt, sondern kann vorteilhaft auch zur Erkennung von Aerosolen bzw. Regentropfen oder Schmutzpartikeln allein, z.B. in der Umgebungsluft, eingesetzt werden. Hierzu kann die optische Übertragungsstrecke dementsprechend so ausgebildet sein, dass allein ein zu untersuchender Raumbereich Bestandteil der Freiraumübertragungsstrecke ist, d.h. ohne eine darin angeordnete Scheibe oder dergleichen.

Obwohl die vorstehenden Ausführungsbeispiele der Erfindung sich auf eine Auswertung von Empfangssignalen beziehen, die an zu detektierenden Medien reflektiert worden sind, ist das erfindungsgemäße Prinzip unter Auswertung des Sendesignals s1 und des hieran speziell angepassten Referenzsignals sr auch anwendbar auf solche Anteile des Sendesignals s1, die durch ein zu detektierendes Medium transmittiert worden sind. In diesem Fall sind der Sender 110 (Figur 5) und der Empfänger 130 entsprechend so anzuordnen, dass der transmittierte Anteil des Sendesignals s1. von dem Empfänger 130 empfang- und auswertbar ist. Auch bei dieser Erfindungsvariante können Hilfsoptiken wie DMD-Einheiten oder ortsfeste Spiegel verwendet werden, um den Strahlengang z.B. im Hinblick auf ein besonders kleinbauendes Sensormodul 500 zu optimieren.

## Patentansprüche

1. Sensormodul (500) zur Detektion von Aerosolen und/oder Regentropfen, insbesondere auf einer Windschutzscheibe eines Kraftfahrzeugs, mit mindestens einer optischen Sensorvorrichtung (100), die ausgebildet ist, einen entfernt von dem Sensormodul (500) angeordneten Bereich, insbesondere die Windschutzscheibe (600), mit mindestens einem ersten optischen Sendesignal (s1) zu beaufschlagen, mit einer Auswerteeinheit (130), die ausgebildet ist, ein in dem Bereich, insbesondere an dem Aerosol bzw. den Regentropfen reflektiertes, und/oder transmittiertes, erstes Empfangssignal (s1') und ein Referenzsignal (sr) zu analysieren, um auf das Vorhandensein des Aerosols und/oder von Regentropfen zu schließen, mit einem Sender zum Senden des mindestens einen ersten optischen Sendesignals (s1) mit einer vorgebbaren ersten Signalform über eine erste Übertragungsstrecke (190a), wobei die erste Übertragungsstrecke (190a) zumindest teilweise im Freiraum, insbesondere zwischen dem Sensormodul (500) bzw. dem Sender und der Windschutzscheibe (600), verläuft, und mit einem Empfänger zum Empfangen des Empfangssignals (s1') an einem Ausgang der ersten Übertragungsstrecke (190a),
**dadurch gekennzeichnet, dass** die Sensorvorrichtung (100) aufweist
- einen Referenzsender zum Senden mindestens eines ersten Referenzsignals (sr) mit einer vorgebbaren Referenzsignalform über eine Referenzübertragungsstrecke (190r), wobei die Referenzübertragungsstrecke (190r) eine bekannte Übertragungsfunktion aufweist,
- einen Empfänger zum Empfangen eines ersten Referenzempfangssignals (sr') an einem Ausgang der Referenzübertragungsstrecke (190r), wobei das erste Sendesignal (s1) und das Referenzsignal (sr) jeweils von Null verschiedene Frequenzanteile aufweisen, und sich die Zeitfunktionen der Signale (s1, sr) zumindest über einen vorgebbaren Zeitbereich hinweg zu einem Gleichsignal addieren.

2. Sensormodul (500) nach Anspruch 1, **dadurch gekennzeichnet, dass** die Auswerteeinheit (130) dazu ausgebildet ist:
- das erste Empfangssignal (s1') mit einem/dem Referenzempfangssignal (sr') zu Addieren oder zu Multiplizieren, um ein Summensignal (a1) zu erhalten,
- vorgebbare Zeitbereiche des Summensignals (a1) auszuwerten, um auf eine Reflexion und/oder Dämpfung und/oder Phasenverschiebung des Sendesignals (s1) durch das Aerosol bzw. Regentropfen zu schließen,
- aus der Reflexion und/oder Dämpfung und/oder Phasenverschiebung auf das Aerosol bzw. die Regentropfen rückzuschließen.

3. Sensormodul (500) nach Anspruch 2, **dadurch gekennzeichnet, dass** die Auswerteeinheit (130) ausgebildet ist, das Summensignal (a1) über mehrere vorgebbare Zeitbereiche zu addieren bzw. zu integrieren.

4. Sensormodul (500) nach einem der Ansprüche 2 bis 3, **dadurch gekennzeichnet, dass** jeweils unterschiedliche Zeitbereiche (T1, T2, T3, T4; T5, T6, T7, T8) des Summensignals (a1) auswertbar sind, um auf die Reflexion und/oder Dämpfung und/oder Phasenverschiebung des Sendesignals (s1) zu schließen.

5. Sensormodul (500) nach einem der vorstehenden Ansprüche, **dadurch gekennzeichnet, dass** mindestens eine steuerbare Mikrospiegelanordnung (DMD) vorgesehen ist, um den Strahlengang des Sendesignals (s1) und/oder des Empfangssignals (s1') und/oder des Referenzsignals (sr) zu beeinflussen.

6. Sensormodul (500) nach einem der vorstehenden Ansprüche, **dadurch gekennzeichnet, dass** mindestens eine Fokussieroptik vorgesehen ist, um das Sendesignal (s1) auf einen zu untersuchenden Raumbereich zu fokussieren.

7. Sensormodul (500) nach einem der vorstehenden Ansprüche, **gekennzeichnet durch** eine Leuchtdiode und/oder eine Laserdiode (DL) zur Erzeugung des Sendesignals (s1) und/oder des Referenzsignals (sr).

8. Verfahren zum Betreiben eines Sensormoduls (500) zur Detektion von Aerosolen und/oder Regentropfen, insbesondere auf einer Windschutzscheibe (600) eines Kraftfahrzeugs, wobei mindestens eine optische Sensorvorrichtung (100) einen entfernt von dem Sensormodul (500) angeordneten Bereich, insbesondere die Windschutzscheibe (600), mit mindestens einem ersten optischen Sendesignal (s1) beaufschlagt, wobei eine Auswerteeinheit (130) ein in dem Bereich, insbesondere an dem Aerosol bzw. den Regentropfen reflektiertes und/oder transmittiertes, erstes Empfangssignal (s1') und ein Referenzsignal (sr) analysiert, um auf das Vorhandensein des Aerosols und/oder von Regentropfen zu schließen, wobei mindestens ein erstes optisches Sendesignal (s1) mit einer vorgebbaren ersten Signalform über eine erste Übertragungsstrecke (190a) gesendet wird, wobei die erste Übertragungsstrecke (190a) zumindest teilweise im Freiraum, insbesondere zwischen dem Sensormodul (500) und der Windschutzscheibe (600), verläuft,
und wobei an einem Ausgang der ersten Übertragungsstrecke (190a) das erste Empfangssignals (s1') empfangen wird,
**dadurch gekennzeichnet, dass**
- mindestens ein erstes Referenzsignal (sr) mit einer vorgebbaren Referenzsignalform über eine Referenzübertragungsstrecke (190r) gesendet wird, wobei die Referenzübertragungsstrecke (190r) eine bekannte Übertragungsfunktion aufweist,
- an einem Ausgang der Referenzübertragungsstrecke (190r) ein erstes Referenzempfangssignal (sr') empfangen wird, wobei das erste Sendesignal (s1) und das Referenzsignal (sr) jeweils von Null verschiedene Frequenzanteile aufweisen, und sich die Zeitfunktionen der Signale (s1, sr) zumindest über einen vorgebbaren Zeitbereich hinweg zu einem Gleichsignal addieren.

9. Verfahren nach Anspruch 8, **dadurch gekennzeichnet, dass** das erste Sendesignal (s1) und das Referenzsignal (sr) jeweils ein sinusförmiges oder rechteckförmiges Signal ist, und dass das erste Sendesignal (s1) eine vorgebbare Phasenverschiebung, insbesondere 180 Grad, zu dem Referenzsignal (sr) aufweist.

10. Verfahren nach einem der Ansprüche 8 bis 9, **dadurch gekennzeichnet, dass** die Analyse folgende Schritte aufweist:
- Addieren oder Multiplizieren des ersten Empfangssignals (s1') mit dem Referenzempfangssignal (sr'), um ein Summensignal (a1) zu erhalten,
- Auswerten vorgebbarer Zeitbereiche des Summensignals (a1), um auf eine Reflexion und/oder Dämpfung und/oder Phasenverschiebung des Sendesignals (s1) durch die erste Übertragungsstrecke (190a) zu schließen,
- Rückschließen auf das Vorhandensein von Aerosolen und/oder Regentropfen aus der Reflexion und/oder Dämpfung und/oder Phasenverschiebung.

11. Verfahren nach Anspruch 10, **dadurch gekennzeichnet, dass** das Auswerten vorgebbarer Zeitbereiche das Integrieren des Summensignals (a1) über mehrere vorgebbare Zeitbereiche bzw. das Addieren des Summensignals (a1) über mehrere vorgebbare Zeitbereiche umfasst.

12. Verfahren nach einem der Ansprüche 10 oder 11, **dadurch gekennzeichnet, dass** jeweils unterschiedliche Zeitbereiche (T1, T2, T3, T4; T5, T6, T7, T8) des Summensignals (a1) ausgewertet werden, um auf die Reflexion und/oder Dämpfung und/oder Phasenverschiebung des Sendesignals (s1) durch die erste Übertragungsstrecke (190a) zu schließen.

13. Verfahren nach einem der Ansprüche 9 bis 12, **dadurch gekennzeichnet, dass** unter Berücksichtigung einer zeitlichen Änderung des Empfangssignals (s1) und/oder des Referenzempfangssignals (sr') auf das Vorhandensein von Regentropfen oder Schmutzpartikeln geschlossen wird.

14. Verfahren nach einem der Ansprüche 8 bis 13, **dadurch gekennzeichnet, dass** mehrere Sendesignale (s1) mit unterschiedlichen Wellenlängen verwendet werden.

15. Verfahren nach einem der Ansprüche 8 bis 14, **dadurch gekennzeichnet, dass** eine Reflektivität eines mit dem Sendesignal (s1) beaufschlagten Bereichs untersucht wird.

## Claims

1. Sensor module (500) for the detection of aerosols and/or raindrops, in particular on a windscreen of a motor vehicle, having at least one optical sensor apparatus (100) which is designed to apply at least one first optical transmission signal (s1) to a region arranged such that it is remote from the sensor module (500), in particular the windscreen (600), having an evaluation unit (130) which is designed to analyse a first reception signal (s1') reflected and/or transmitted in that region, in particular at the aerosol or the raindrops, and a reference signal (sr) in order to infer the presence of the aerosol and/or raindrops, having a transmitter for transmitting the at least one first optical transmission signal (s1) with a predefinable first signal form over a first transmission path (190a), the first transmission path (190a) running at least partially in free space, in particular between the sensor module (500) or the transmitter and the windscreen (600), and having a receiver for receiving the reception signal (s1') at an output of the first transmission path (190a), **characterized in that** the sensor apparatus (100) has
- a reference transmitter for transmitting at least one first reference signal (sr) with a predefinable reference signal form over a reference transmission path (190r), the reference transmission path (190r) having a known transfer function,
- a receiver for receiving a first reference reception signal (sr') at an output of the reference transmission path (190r), the first transmission signal (s1) and the reference signal (sr) each having frequency components which differ from zero, and the time functions of the signals (s1, sr) being added to form a DC signal at least over a predefinable time range.

2. Sensor module (500) according to Claim 1, **characterized in that** the evaluation unit (130) is designed:
- to add or multiply the first reception signal (s1') to/by a/the reference reception signal (sr') in order to obtain a sum signal (a1),
- to evaluate predefinable time ranges of the sum signal (a1) in order to infer reflection and/or attenuation and/or phase shifting of the transmission signal (s1) by the aerosol or raindrops,
- to infer the aerosol or the raindrops from the reflection and/or attenuation and/or phase shifting.

3. Sensor module (500) according to Claim 2, **characterized in that** the evaluation unit (130) is designed to add or integrate the sum signal (a1) over a plurality of predefinable time ranges.

4. Sensor module (500) according to either of Claims 2 and 3, **characterized in that** respective different time ranges (T1, T2, T3, T4; T5, T6, T7, T8) of the sum signal (a1) can be evaluated in order to infer the reflection and/or attenuation and/or phase shifting of the transmission signal (s1) .

5. Sensor module (500) according to one of the preceding claims, **characterized in that** at least one controllable micromirror arrangement (DMD) is provided in order to influence the beam path of the transmission signal (s1) and/or the reception signal (s1') and/or the reference signal (sr).

6. Sensor module (500) according to one of the preceding claims, **characterized in that** at least one focusing optical system is provided in order to focus the transmission signal (s1) onto a spatial region to be examined.

7. Sensor module (500) according to one of the preceding claims, **characterized by** a light-emitting diode and/or a laser diode (DL) for generating the transmission signal (s1) and/or the reference signal (sr).

8. Method for operating a sensor module (500) for the detection of aerosols and/or raindrops, in particular on a windscreen (600) of a motor vehicle, at least one optical sensor apparatus (100) applying at least one first optical transmission signal (s1) to a region arranged such that it is remote from the sensor module (500), in particular the windscreen (600), an evaluation unit (130) analysing a first reception signal (s1') reflected and/or transmitted in that region, in particular at the aerosol or the raindrops, and a reference signal (sr) in order to infer the presence of the aerosol and/or raindrops, at least one first optical transmission signal (s1) with a predefinable first signal form being transmitted over a first transmission path (190a), the first transmission path (190a) running at least partially in free space, in particular between the sensor module (500) and the windscreen (600), and the first reception signal (s1') being received at an output of the first transmission path (190a), **characterized in that**
- at least one first reference signal (sr) with a predefinable reference signal form is transmitted over a reference transmission path (190r), the reference transmission path (190r) having a known transfer function,
- a first reference reception signal (sr') is received at an output of the reference transmission path (190r), the first transmission signal (s1) and the reference signal (sr) each having frequency components which differ from zero, and the time functions of the signals (s1, sr) being added to form a DC signal at least over a predefinable time range.

9. Method according to Claim 8, **characterized in that** the first transmission signal (s1) and the reference signal (sr) are each a sinusoidal or square-wave signal, and **in that** the first transmission signal (s1) has a predefinable phase shift, in particular 180 degrees, with respect to the reference signal (sr).

10. Method according to either of Claims 8 and 9, **characterized in that** the analysis has the following steps:
- adding or multiplying the first reception signal (s1') to/by the reference reception signal (sr') in order to obtain a sum signal (a1),
- evaluating predefinable time ranges of the sum signal (a1) in order to infer reflection and/or attenuation and/or phase shifting of the transmission signal (s1) by the first transmission path (190a),
- inferring the presence of aerosols and/or raindrops from the reflection and/or attenuation and/or phase shifting.

11. Method according to Claim 10, **characterized in that** the process of evaluating predefinable time ranges comprises integrating the sum signal (a1) over a plurality of predefinable time ranges or adding the sum signal (a1) over a plurality of predefinable time ranges.

12. Method according to either of Claims 10 and 11, **characterized in that** respective different time ranges (T1, T2, T3, T4; T5, T6, T7, T8) of the sum signal (a1) are evaluated in order to infer the reflection and/or attenuation and/or phase shifting of the transmission signal (s1) by the first transmission path (190a).

13. Method according to one of Claims 9 to 12, **characterized in that** the presence of raindrops or dirt particles is inferred taking into account a temporal change in the reception signal (s1') and/or the reference reception signal (sr').

14. Method according to one of Claims 8 to 13, **characterized in that** a plurality of transmission signals (s1) at different wavelengths are used.

15. Method according to one of Claims 8 to 14, **characterized in that** a reflectivity of a region to which the transmission signal (s1) is applied is examined.

## Revendications

1. Module capteur (500) pour la détection d'aérosols et/ou de gouttes de pluie, notamment sur un pare-brise d'un véhicule automobile, comprenant au moins un dispositif de détection optique (100) qui est conçu pour soumettre une zone disposée à distance du module capteur (500), notamment le pare-brise (600), à au moins un premier signal d'émission optique (s1), comprenant une unité d'interprétation (130) qui est conçue pour analyser un premier signal de réception (s1') réfléchi et/ou émis dans la zone, notamment sur l'aérosol ou les gouttes de pluie, ainsi qu'un signal de référence (sr) afin de déduire la présence de l'aérosol et/ou de gouttes de pluie, comprenant un émetteur pour émettre l'au moins un premier signal d'émission optique (s1) avec une première forme de signal pouvant être prédéfinie sur un premier trajet de transmission (190a), le premier trajet de transmission (190a) s'étendant au moins partiellement dans l'espace libre, notamment entre le module capteur (500) ou l'émetteur et le pare-brise (600), et comprenant un récepteur pour recevoir le signal de réception (s1') à une sortie du premier trajet de transmission (190a), **caractérisé en ce que** le dispositif de détection (100) présente
- un émetteur de référence pour émettre au moins un premier signal de référence (sr) ayant une forme de signal de référence pouvant être prédéfinie sur un trajet de transmission de référence (190r), le trajet de transmission de référence (190r) présentant une fonction de transmission connue,
- un récepteur pour recevoir un premier signal de réception de référence (sr') sur une sortie du trajet de transmission de référence (190r), le premier signal d'émission (s1) et le signal de référence (sr) présentant respectivement des composantes de fréquence différentes de zéro et les fonctions de temps des signaux (s1, sr) s'additionnant pour former un signal continu au moins sur une plage de temps pouvant être prédéfinie.

2. Module capteur (500) selon la revendication 1, **caractérisé en ce que** l'unité d'interprétation (130) est configurée pour :
- additionner ou multiplier le premier signal de réception (s1') avec un/le signal de réception de référence (sr') afin d'obtenir un signal total (a1),
- interpréter les plages de temps pouvant être prédéfinies du signal total (a1) afin de déduire une réflexion et/ou un affaiblissement et/ou un déphasage du signal d'émission (s1) par l'aérosol ou les gouttes de pluie,
- déduire la présence de l'aérosol ou des gouttes de pluie à partir de la réflexion et/ou de l'affaiblissement et/ou du déphasage.

3. Module capteur (500) selon la revendication 2, **caractérisé en ce que** l'unité d'interprétation (130) est configurée pour additionner ou intégrer le signal total (a1) sur plusieurs plages de temps pouvant être prédéfinies.

4. Module capteur (500) selon l'une des revendications 2 à 3, **caractérisé en ce que** des plages de temps à chaque fois différentes (T1, T2, T3, T4 ; T5, T6, T7, T8) du signal total (a1) peuvent être interprétées afin de déduire la réflexion et/ou l'affaiblissement et/ou le déphasage du signal d'émission (s1).

5. Module capteur (500) selon l'une des revendications précédentes, **caractérisé en ce qu'**il est prévu au moins un arrangement de micromiroirs (DMD) commandable pour influencer la trajectoire des rayons du signal d'émission (s1) et/ou du signal de réception (s1') et/ou du signal de référence (sr).

6. Module capteur (500) selon l'une des revendications précédentes, **caractérisé en ce qu'**il est prévu au moins une optique de concentration pour concentrer le signal d'émission (s1) sur une zone d'espace à examiner.

7. Module capteur (500) selon l'une des revendications précédentes, **caractérisé par** une diode électroluminescente et/ou une diode laser (DL) pour générer le signal d'émission (s1) et/ou le signal de référence (sr).

8. Procédé d'utilisation d'un module capteur (500) pour la détection d'aérosols et/ou de gouttes de pluie, notamment sur un pare-brise (600) d'un véhicule automobile, au moins un dispositif de détection optique (100) soumettant une zone disposée à distance du module capteur (500), notamment le pare-brise (600), à au moins un premier signal d'émission optique (s1), une unité d'interprétation (130) analysant un premier signal de réception (s1') réfléchi et/ou émis dans la zone, notamment sur l'aérosol ou les gouttes de pluie, ainsi qu'un signal de référence (sr) afin de déduire la présence de l'aérosol et/ou de gouttes de pluie, au moins un premier signal d'émission optique (s1) avec une première forme de signal pouvant être prédéfinie étant émis sur un premier trajet de transmission (190a), le premier trajet de transmission (190a) s'étendant au moins partiellement dans l'espace libre, notamment entre le module capteur (500) et le pare-brise (600),
et le premier signal de réception (s1') étant reçu à une sortie du premier trajet de transmission (190a), **caractérisé en ce que**
- au moins un premier signal de référence (sr) ayant une forme de signal de référence pouvant être prédéfinie étant émis sur un trajet de transmission de référence (190r), le trajet de transmission de référence (190r) présentant une fonction de transmission connue,
- un premier signal de réception de référence (sr') étant reçu sur une sortie du trajet de transmission de référence (190r), le premier signal d'émission (s1) et le signal de référence (sr) présentant respectivement des composantes de fréquence différentes de zéro et les fonctions de temps des signaux (s1, sr) s'additionnant pour former un signal continu au moins sur une plage de temps pouvant être prédéfinie.

9. Procédé selon la revendication 8, **caractérisé en ce que** le premier signal d'émission (s1) et le signal de référence (sr) sont respectivement un signal sinusoïdal ou un signal rectangulaire et que le premier signal d'émission (s1) présente un déphasage pouvant être prédéfini, notamment de 180 degrés, par rapport au signal de référence (sr).

10. Procédé selon l'une des revendications 8 à 9, **caractérisé en ce que** l'analyse présente les étapes suivantes :
- addition ou multiplication du premier signal de réception (s1') avec le signal de réception de référence (sr') afin d'obtenir un signal total (a1),
- interprétation de plages de temps pouvant être prédéfinies du signal total (a1) afin de déduire une réflexion et/ou un affaiblissement et/ou un déphasage du signal d'émission (s1) à travers le premier trajet de transmission (190a),
- déduction de la présence d'aérosols ou de gouttes de pluie à partir de la réflexion et/ou de l'affaiblissement et/ou du déphasage.

11. Procédé selon la revendication 10, **caractérisé en ce que** l'interprétation de plages de temps pouvant être prédéfinies comprend l'intégration du signal total (a1) sur plusieurs plages de temps pouvant être prédéfinies ou l'addition du signal total (a1) sur plusieurs plages de temps pouvant être prédéfinies.

12. Procédé selon l'une des revendications 10 ou 11, **caractérisé en ce que** des plages de temps à chaque fois différentes (T1, T2, T3, T4 ; T5, T6, T7, T8) du signal total (a1) sont interprétées afin de déduire la réflexion et/ou l'affaiblissement et/ou le déphasage du signal d'émission (s1) à travers le premier trajet de transmission (190a).

13. Procédé selon l'une des revendications 9 à 12, **caractérisé en ce que** la présence de gouttes de pluie ou de particules de poussière est déduite en prenant en considération une modification dans le temps du signal de réception (s1') et/ou du signal de réception de référence (sr').

14. Procédé selon l'une des revendications 8 à 13, **caractérisé en ce que** plusieurs signaux d'émission (s1) ayant des longueurs d'onde différentes sont utilisés.

15. Procédé selon l'une des revendications 8 à 14, **caractérisé en ce qu'**une réflectivité d'une zone soumise au signal d'émission (s1) est examinée.
